(19) Europäisches Patentamt
European Patent Office
Office européen des brevets

(11) EP 1 493 483 B1

(12) EUROPEAN PATENT SPECIFICATION

(45) Date of publication and mention of the grant of the patent:
**07.12.2005 Bulletin 2005/49**

(51) Int Cl.[7]: **B01D 53/94**, F02D 21/08

(21) Application number: **04014249.9**

(22) Date of filing: **17.06.2004**

(54) **Exhaust purification device of internal combustion engine**

Abgasreinigungsanlage einer Brennkraftmaschine

Dispositif de purification des gaz d'échappement d'un moteur à combustion interne

(84) Designated Contracting States:
**DE ES FR GB IT**

(30) Priority: **02.07.2003 JP 2003190500**

(43) Date of publication of application:
**05.01.2005 Bulletin 2005/01**

(73) Proprietor: **Toyota Jidosha Kabushiki Kaisha**
**Toyota-shi, Aichi-ken 471-8571 (JP)**

(72) Inventors:
- **Negishi, Akiyoshi**
  **Toyota-shi, Aichi-ken, 471-8571 (JP)**
- **Kibe, Kazuya**
  **Toyota-shi, Aichi-ken, 471-8571 (JP)**
- **Okada, Shin**
  **Toyota-shi, Aichi-ken, 471-8571 (JP)**
- **Matsuda, Yoshihiko**
  **Toyota-shi, Aichi-ken, 471-8571 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**EP-A- 0 449 423** **EP-A- 1 167 727**

- **PATENT ABSTRACTS OF JAPAN vol. 017, no. 558 (M-1493), 7 October 1993 (1993-10-07) & JP 05 156933 A (NISSAN MOTOR CO LTD), 22 June 1993 (1993-06-22)**
- **PATENT ABSTRACTS OF JAPAN vol. 1996, no. 09, 30 September 1996 (1996-09-30) & JP 08 114111 A (MATSUSHITA ELECTRIC IND CO LTD), 7 May 1996 (1996-05-07)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 493 483 B1

Printed by Jouve, 75001 PARIS (FR)

## Description

BACKGROUND OF THE INVENTION

1. Field of the Invention

The present invention relates to an exhaust purification device of an internal combustion engine.

2. Description of the Related Art

Exhaust gas exhausted from engine combustion chambers contain particle-shaped substances called "particulate". To trap and burn this particulate, there is known an internal combustion engine having a particulate filter arranged in the engine exhaust passage and an oxidation catalyst arranged upstream of the particulate filter (Japanese Examined Patent Publication (Kokoku) No. 7-106290).

Note that this particulate is comprised of insoluble organic fractions such as soot and soluble organic fractions such as unburned fuel. Hereinafter, the soluble organic fractions will be referred to as "SOF".

When the soluble organic fractions, that is, SOF, contained in the exhaust gas are brought into contact with the catalyst and the temperature of the catalyst is a low temperature of not more than about 120°C to 130°C, the SOF is adsorbed and deposited on the catalyst without burning. Therefore, if this catalyst is maintained at such a low temperature, a large amount of SOF will be deposited on the catalyst. On the other hand, if the temperature of the catalyst rises to more than about 200°C, the SOF deposited on the catalyst will start being burned. Due to the heat of combustion, the temperature of the catalyst rapidly rises. At this time, if a large amount of SOF had been deposited on the catalyst, this SOF will rapidly evaporate.

If the exhaust gas contains a sufficient amount of air at that time, the evaporated SOF will be burned well. At this time, however, if the exhaust gas does not contain a sufficient amount of air, the evaporated SOF will flow down in the exhaust passage without being burned. During that time, the SOF will be cooled and will agglomerate to form particles. Therefore, white smoke will be produced.

SUMMARY OF THE INVENTION

An object of the present invention is to provide an exhaust purification device of an internal combustion engine designed to suppress the production of such white smoke.

According to the present invention, there is provided an exhaust purification device in an internal combustion engine in which an exhaust purification catalyst is arranged in an engine exhaust passage and soluble organic fractions of particulate contained in exhaust gas are adsorbed and deposited on the catalyst when a temperature of the catalyst is lower than a lower limit temperature of combustion of the soluble organic fractions, the device comprising judging means for judging if white smoke might be produced by the soluble organic fractions adsorbed on the catalyst and exhaust air control means for increasing the amount of exhaust air exhausted from the engine when it is judged that white smoke might be produced.

BRIEF DESCRIPTION OF THE DRAWINGS

These and other objects and features of the present invention will become clearer from the following description of the preferred embodiments given with reference to the attached drawings, wherein:

FIG. 1 is an overview of an internal combustion engine;
FIG. 2 is a map of a target throttle opening degree TA and target intake air amount GAO;
FIG. 3 is a flow chart for control of the throttle opening degree and EGR amount;
FIG. 4 is a view of the target intake air amount GAO, excess air amount, etc.;
FIG. 5 is a view of an SOF adsorption rate $R_s$;
FIG. 6 is a view for explaining the production of white smoke;
FIG. 7 is a time chart for explaining control for suppression of production of white smoke;
FIG. 8 is a flow chart of control for suppression of production of white smoke;
FIG. 9 is a flow chart of control for suppression of production of white smoke;
FIG. 10 is a flow chart of control for suppression of production of white smoke;
FIG. 11 is a flow chart of control for suppression of production of white smoke;
FIG. 12 is a time chart of control for suppression of adsorption of SOF;
FIG. 13 is a time chart of control for treating SOF;
FIG. 14 is a flow chart for processing of the SOF;
FIG. 15 is a flow chart for calculation of the SOF adsorption rate;
FIG. 16 is a view of a map of a reference steady state catalyst temperature TCT;
FIG. 17 is a view of correction coefficients KTW, KTA, and KSP;
FIG. 18 is a view of a time constant;
FIG. 19 is a view of the SOF adsorption rate;
FIG. 20 is a flow chart of calculation of an SOF adsorption speed;
FIG. 21 is a view of a map of an SOF exhaust amount GSOF;
FIG. 22 is a view of a map of a correction coefficient KG;
FIG. 23 is a flow chart of calculation of an SOF adsorption amount;
FIG. 24 is a view of an SOF combustion rate $R_{com}$;

FIG. 25 is a flow chart of control of EGR gas;
FIG. 26 is a view of an EGR control coefficient KE;
FIG. 27 is a map of a correction air amount ΔGAO;
FIG. 28 is a view of a map of a reference exhaust SOF reduction GRE;
FIG. 29 is a flow chart of processing of the SOF;
FIG. 30 is a flow chart of control of fuel injection;
FIG. 31 is a view of an injection timing control coefficient KI;
FIG. 32 is a map of a correction advance ΔIθ; and
FIG. 33 is a view of a map of a reference exhaust SOF reduction GRI.

## DESCRIPTION OF THE PREFERRED EMBODIMENTS

FIG. 1 shows the case of application of the present invention to a compression ignition type internal combustion engine. Note that the present invention may also be applied to a spark ignition type internal combustion engine.

Referring to FIG. 1, 1 indicates an engine body, 2 a cylinder block, 3 a cylinder head, 4 a piston, 5 a combustion chamber, 6 an electronically controlled fuel injector, 7 an intake value, 8 an intake port, 9 an exhaust valve, and 10 an exhaust port. Each intake port 8 is connected to a surge tank 12 through a corresponding intake tube 11. The surge tank 12 is connected through an intake duct 13 to a compressor 14a of an exhaust turbocharger 14. The intake duct 13 has a throttle valve 16 driven by a step motor 15 arranged in it. Further, around the intake duct 13 is arranged a cooling device 17 for cooling the intake air flowing through the inside of the intake duct 13. In the embodiment shown in FIG. 1, the engine cooling water is guided into the cooling device 17. The engine cooling water cools the intake air.

The inlet of the compressor 14a is connected through the intake duct 18 to an cleaner 19. Inside the intake duct 18 are arranged an intake air amount detection sensor 20 for detecting a mass flow rate of the intake air and an intake air temperature sensor 21 for detecting the intake air temperature. Further, the cylinder block 2 mounts a water temperature sensor 22 for detecting the engine cooling water temperature. On the other hand, the exhaust port 10 is connected through an exhaust manifold 23 and exhaust pipe 24 to an exhaust turbine 14b of the exhaust turbocharger 14, while the outlet of the exhaust turbine 14b is connected to a catalytic converter 26 housing an exhaust purification oxidation catalyst 25.

The exhaust manifold 23 and surge tank 12 are connected to each other through an exhaust gas recirculation (hereinafter referred to as an "EGR") passage 27. The EGR passage 27 has an electrically controlled EGR control valve 28 arranged in it. Further, around the EGR passage 27 is arranged a cooling device 29 for cooling the EGR gas flowing through the EGR passage 27. In the embodiment shown in FIG. 1, the engine cooling water is guided inside the cooling device 29. This engine cooling water cools the EGR gas. On the other hand, each fuel injector 6 is linked through a fuel feed tube 30 to a fuel reservoir, that is, a so-called common rail 31. This common rail 31 is supplied with fuel from an electrically controlled variable discharge fuel pump 32. The fuel supplied into the common rail 31 is supplied through each fuel feed tube 30 to the fuel injector 6. The common rail 31 mounts a fuel pressure sensor 33 for detecting the fuel pressure inside the common rail 31. Based on the output signal of the fuel pressure sensor 33, the discharge of the fuel pump 32 is controlled so that the fuel pressure in the common rail 31 becomes the target fuel pressure.

An electronic control unit 40 is comprised of a digital computer provided with a read only memory (ROM) 42, a random access memory (RAM) 43, a microprocessor (CPU) 44, a backup RAM 45 connected to a power source at all times, an input port 46, and an output port 47 all connected to each other by a bidirectional bus 41. The output signal of the fuel pressure sensor 33 is input to the input port 46 through a corresponding AD converter 48. Further, the output signals of the intake air amount detection sensor 20, the intake air temperature sensor 21, and the water temperature sensor 22 are input to the input port 46 through the corresponding A/D converters 48.

An accelerator pedal 50 has a load sensor 51 generating an output voltage proportional to the amount of depression L of the accelerator pedal 50. The output voltage of the load sensor 51 is input to the input port 46 through a corresponding AD converter 48. Further, the input port 46 has a crank angle sensor 52 generating an output pulse each time the crankshaft turns for example by 15 degrees and a vehicle speed sensor 53 generating an output pulse in accordance with the vehicle speed connected to it. On the other hand, the output port 47 is connected through corresponding drive circuits 49 to the fuel injectors 6, throttle valve drive step motor 15, EGR control valve 28, and fuel pump 32.

Next, control of the throttle valve 16 and control of the EGR control valve 28 used in this embodiment of the present invention will be explained. In this embodiment according to the present invention, a target intake air amount is preset in accordance with the engine operating state. The target intake air amount GAO is stored as a function of the fuel injection amount and engine speed in the form of a map as shown in FIG. 2(B) in the ROM 42. On the other hand, a target EGR rate is preset in accordance with the engine operating state. The target opening degree TA of the throttle valve 16 required for making the intake air amount the target intake air amount and making the EGR rate the target EGR rate is stored as a function of the fuel injection amount and engine speed in the form of a map as shown in FIG. 2 (A) in advance in the ROM 42.

Next, a throttle and EGR control routine will be explained with reference to FIG. 3.

Referring to FIG. 3, first, at step 60, the target opening degree TA of the throttle valve 16 is calculated from the map shown in FIG. 2(A). Next, at step 61, the opening degree of the throttle valve 16 is made the target opening degree TA. Next, at step 62, the target intake air amount GAO is calculated from the map shown in FIG. 2(B). Next, at step 63, it is judged if the intake air amount GA detected by the intake air amount detection sensor 20 is larger than the target intake air amount GAO plus a small value $\alpha$ (GAO+$\alpha$). When GA>GAO+$\alpha$, the routine proceeds to step 64, where a constant value $\Delta\theta$ is added to the opening degree $\theta$ of the EGR control valve 28. Next, at step 67, the opening degree $\theta$ of the EGR control valve 28 is increased by exactly the constant value $\Delta\theta$. As a result, the EGR gas amount is increased and the intake air amount GA is reduced.

Conversely, when it is judged that GA≤GAO+$\alpha$ at step 63, the routine proceeds to step 65, and it is judged if the intake air amount GA detected by the intake air amount detection sensor 20 is less than a value (GAO-$\alpha$) which is obtained by subtracting a small value $\alpha$ from the target intake air amount GAO. When GA<GAO-$\alpha$, the routine proceeds to step 66, where the constant value $\Delta\theta$ is subtracted from the opening degree $\theta$ of the EGR control valve 28. Next, at step 67, the opening degree $\theta$ of the EGR control valve 28 is reduced by exactly the constant value $\Delta\theta$. As a result, the EGR gas amount is reduced and the intake air amount GA is increased.

On the other hand, when it is judged at step 65 that GA≥GAO-$\alpha$, that is, when the intake air amount GA is maintained at the target intake air amount GAO, the routine proceeds to step 67. At this time, the opening degree 8 of the EGR control valve 28 is maintained as it is. In this way, in this embodiment according to the present invention, the opening degree $\theta$ of the EGR control valve 28 is controlled so that the intake air amount GA becomes the target intake air amount GAO. At this time, the EGR rate becomes substantially the target EGR rate.

FIG. 4 schematically shows the target opening degree TA and target intake air amount GAO of the throttle valve 16 at a certain engine speed as a function of the load. Referring to FIG. 4, when the engine load is low, the throttle valve 16 is closed. Therefore, the total intake gas amount into the combustion chambers 5 shown by GG in FIG. 4 is reduced if the engine load becomes lower. Further, as the engine load becomes higher, the fuel injection amount increases, while as the fuel injection amount increases, the amount of combustion air used for the combustion increases. On the other hand, the target intake air amount GAO increases by substantially the same gradient as the amount of combustion air as the engine load increases. Therefore, the difference between the target intake air amount GAO and amount of combustion air, constituting the amount of air used for combustion, that is, the excess amount of air, becomes substantially constant regardless of the engine load. Further, the difference between the total intake gas amount GG and the target intake air amount GAO to the combustion chambers 5 is the amount of EGR gas.

Further, as will be understood from FIG. 4, the ratio of the amount of combustion air to the target intake air amount GAO, that is, the air utilization rate, is about 0.3 at the time of no load and is about 0.8 at full load. Further, the EGR gas amount at the time of no load is slightly smaller than the target intake air amount GAO. At the time of high load operation, the EGR gas amount is reduced. On the other hand, the excess air shown in FIG. 4 is exhausted as it is from the combustion chambers 5, so the amount of excess air shown in FIG. 4 matches with the amount of exhaust air exhausted from the combustion chambers 5. Therefore, the amount of exhaust air exhausted from the combustion chambers 5 becomes substantially constant regardless of the engine load.

Next, the SOF contained in the exhaust gas will be explained. FIG. 5 shows the relationship between the SOF adsorption rate $R_s$ showing the ratio of the SOF contained in the exhaust gas adsorbed at the catalyst and the temperature TC of the catalyst 25.

As shown in FIG. 5, when the temperature TC of the catalyst 25 is over about 200°C, the SOF adsorption rate $R_s$ becomes zero percent. That is, at this time, all of the SOF contained in the exhaust gas can be burned when contacting the catalyst 25. On the other hand, when the temperature TC of the catalyst 25 becomes lower than the lower limit temperature of combustion of SOF, that is, 120°C to 130°C, the SOF adsorption rate $R_s$ becomes 100 percent. That is, at this time, all SOF contained in the exhaust gas is adsorbed and deposited on the catalyst 25. Note that when the temperature TC of the catalyst 25 is from 120°C to 130°C to about 200°C, the lower the temperature TC of the catalyst 25, the higher the SOF adsorption rate $R_s$. At this time, part of the SOF is adsorbed at the catalyst 25, while part of the SOF is burned on the catalyst 25.

Further, as explained at the start, when the temperature TC of the catalyst 25 is low, the SOF adsorbed and deposited on the catalyst 25 starts to be burned when the temperature TC of the catalyst 25 becomes more than about 200°C. When the SOF starts to be burned, the temperature TC of the catalyst 25 rises. If a large amount of SOF has deposited on the catalyst when the temperature TC of the catalyst 25 rises, the SOF separates from the catalyst and evaporates. At this time, if the exhaust gas contains a sufficient amount of air, the evaporated SOF can be burned well. As opposed to this, when the exhaust gas does not contain a sufficient amount of air, the evaporated SOF flows down through the exhaust passage without burning. This SOF is cooled during that time and agglomerates to form particles and therefore white smoke is produced.

Further, as explained above, regardless of the engine load, a substantially constant amount of air as shown by the hatching in FIG. 4 is exhausted from the combustion chambers 5. When however a large amount of SOF deposits on the catalyst 25 and the large amount of SOF evaporates, even if air of an extent shown by the hatching in FIG. 4 is exhausted from the combustion chambers 5, this will be insufficient for burning the evaporated SOF and therefore at that time white smoke will be produced.

Next, this will be explained with reference to FIG. 6. FIG. 6 shows the case where the engine is operated at no load for a long period of time, a large amount of SOF deposits on the catalyst 25, and the engine load temporarily increases in this state. As shown in FIG. 6, before the engine load is temporarily increased, the temperature TC of the catalyst 25 is low. At this time, the SOF deposited on the catalyst 25 will not burn. Next, if the engine load is increased, the exhaust gas temperature will rise and the SOF on the catalyst 25 will start to burn. When the SOF starts to burn, as shown by the solid line in FIG. 6, the temperature TC of the catalyst 25 will rapidly rise.

Since a large amount of SOF is deposited on the catalyst 25, if the temperature TC of the catalyst 25 rapidly rises, a large amount of SOF will evaporate from the catalyst 25. The solid line in FIG. 6 shows the time when the amount of exhaust air exhausted from the combustion chambers 5 is small as shown by the hatching in FIG. 4. At this time, the majority of the evaporated SOF will not be burned, so white smoke will be produced in the region shown by the arrow in FIG. 6.

As opposed to this, the broken line in FIG. 6 shows the case where the amount of exhaust gas exhausted from the combustion chambers 5 is large. Specifically speaking, FIG. 6 shows the case of setting the target intake air amount GAO to the total intake gas amount GG shown in FIG. 4. If setting the target intake air amount GAO to the total intake air amount GG in this way, the EGR control valve 28 is fully closed and the supply of EGR gas is stopped. That is, the part shown by the EGR gas amount in FIG. 4 is replaced by the intake air. This intake air is exhausted as excess air from the combustion chambers 5. Therefore, at this time, as will be understood from FIG. 4, the amount of exhaust air exhausted from the combustion chambers 5 is increased about two-fold.

If the amount of exhaust air is increased in this way, all or the majority of the SOF evaporated from the catalyst 25 is burned and therefore the production of white smoke can be suppressed at this time. Note that if the amount of exhaust air increases and the amount of exhaust gas increases, the cooling action of the catalyst 25 due to the flow of exhaust gas becomes high. Therefore, despite that all or the majority of the SOF burns, as shown by the broken line in FIG. 6, the catalyst temperature TC does not become that high.

In this way, when a large amount of SOF deposits on the catalyst 25 and the deposited SOF is burned, white smoke is produced when the amount of exhaust air exhausted from the combustion chambers 5 is small. Therefore, in the present invention, provision is made of judging means for judging if white smoke might be produced from the SOF adsorbed on the catalyst 25 and exhaust air control means for increasing the amount of exhaust air from the combustion chambers 5 for suppressing the production of white smoke when it is judged that white smoke might be produced.

If considering the possibility of production of white smoke from the SOF adsorbed on the catalyst 25, no white smoke will be produced when almost no SOF is adsorbed on the catalyst 25. white smoke might be produced when more than a certain extent of SOF is deposited on the catalyst 25. Therefore, in one embodiment according to the present invention, it is judged that white smoke might be produced when it is judged that the amount of SOF adsorbed on the catalyst 2 is more than a predetermined amount GX. To suppress the production of white smoke at this time, the amount of exhaust air is increased.

Further, if the temperature TC of the catalyst 25 does not become more than the lower limit temperature of combustion of the SOF, the SOF oxidation action will not be performed. Therefore, white smoke might be produced when the temperature TC of the catalyst 25 is higher than the lower limit temperature of combustion of the SOF.

Accordingly, in another embodiment according to the present invention, as shown in FIG. 7, when it is judged that the amount of adsorption of SOF on the catalyst 25 is more than the predetermined amount GX and it is judged that the temperature TC of the catalyst 25 is higher than the lower limit temperature $T_{sc}$ of combustion of the SOF, it is judged that white smoke might be produced. At this time, production of white smoke is suppressed by increasing the amount of exhaust air.

FIG. 8 shows the routine for control for suppression of the production of white smoke for working this embodiment. That is, first, at step 70, it is judged if the amount of adsorption of SOF to the catalyst 25 might be higher than the predetermined amount GX. When the amount of adsorption of SOF might be more than the predetermined amount GX, the routine proceeds to step 71, where it is judged if the temperature TC of the catalyst 25 is higher than the lower limit temperature $T_{sc}$ of combustion of the SOF. When $TC>T_{sc}$, the routine proceeds to step 72, where processing is performed for increasing the amount of exhaust air. Next, the routine returns to step 71. Therefore, the processing for increasing the amount of exhaust air is continued until $TC \leq T_{sc}$. During this time, the amount of EGR becomes zero.

By fully closing the EGR control valve 28 to make the EGR amount zero like in this embodiment, the amount of exhaust air can be increased. However, even if not making the EGR amount zero, it is possible to increase the amount of exhaust air by raising the engine speed, for example, raising the idling speed.

FIG. 9 shows the case where the engine load is increased from the idling operating state. In this case, if the engine load is slowly increased, the temperature of the exhaust gas flowing into the catalyst 25 will also slowly rise. On the other hand, even if the SOF deposited on the catalyst 25 starts to be burned at this time, since the flow rate of the exhaust gas is higher than that at the time of idling operation, the catalyst 25 will receive a strong cooling action compared with time of idling operation. As a result, when the engine load is slowly increased, the temperature TC of the catalyst 25 slowly rises.

If the temperature TC of the catalyst 25 slowly rises in this way, even the SOF deposited on the catalyst 25 will slowly evaporated from the catalyst 25. Therefore, at this time, as shown by the hatching in FIG. 4, even if the amount of excess air is small, the SOF will be burned well and therefore no white smoke will be produced at this time.

As opposed to this, if the engine load is rapidly raised, the temperature of the exhaust gas also rapidly rises, so the temperature TC of the catalyst 25 rapidly rises as shown in FIG. 9. Therefore, at this time, if a large amount of SOF deposits on the catalyst 25, a large amount of SOF rapidly evaporates from the catalyst 25. Accordingly, as shown by the hatching in FIG. 4, if the amount of excess air is small, the amount of air becomes insufficient for burning the SOF, so white smoke is produced.

Therefore, when the engine load is rapidly raised, white smoke is prevented from being produced by stopping the supply of EGR gas and by increasing the amount of exhaust air exhausted from the combustion chambers 5 from when the engine load starts to be increased to when a predetermined time $\Delta t$ elapses as shown in FIG. 9.

FIG. 10 shows the routine for control of production of white smoke for working this embodiment. That is, at step 75, it is judged if the amount of adsorption of SOF to the catalyst 25 might be higher than the predetermined amount GX. When the amount of adsorption of SOF might be more than the predetermined amount GX, the routine proceeds to step 76, where it is judged if the engine load has been rapidly increased, that is, if the speed of increase $\Delta L$ of the engine load is more than a predetermined speed of increase XL. When $\Delta L > XL$, the routine proceeds to step 77, where processing is performed for increasing the amount of exhaust air.

Further, as explained above, white smoke might be produced when more than a certain extent of SOF is deposited on the catalyst 25. In the routine for control for suppression of the production of white smoke shown in FIG. 8 and FIG. 10, it is judged that white smoke might be produced when the SOF adsorption amount exceeds the GX. In this case, very generally speaking, when the state where the temperature TC of the catalyst 25 is less than the lower limit temperature $T_{sc}$ of combustion of the SOF continues for a certain time, it may be considered that the SOF adsorption amount will reach an amount GX causing production of white smoke. Therefore, when an engine is operated for more than a predetermined time in the state where the temperature TC of the catalyst 25 is lower than the lower limit temperature $T_{sc}$ of combustion of the SOF, it is possible to judge that the SOF adsorption amount on the catalyst 25 is more than a predetermined amount GX.

Further, if the idling operation is continued, the temperature TC of the catalyst 25 becomes less than the lower limit temperature $T_{sc}$ of combustion of the SOF and the SOF in the exhaust gas continues being adsorbed on the catalyst 25. Therefore, when the idling operation is continued for more than a predetermined time, it can be judged that the SOF adsorption amount on the catalyst 25 has become more than the predetermined amount GX.

Further, when the engine load becomes higher and the temperature TC of the catalyst 25 becomes higher than the lower limit temperature $T_{sc}$ of combustion of the SOF, the SOF contained in the exhaust gas of course and also the SOF adsorbed on the catalyst 25 are burned, so the SOF adsorption amount gradually falls. The routine for suppression of the production of white smoke considering this is shown in FIG. 11.

Referring to FIG. 11, first, at step 80, it is judged if the temperature TC of the catalyst 25 is less than the lower limit temperature $T_{sc}$ of combustion of the SOF. When $TC<T_{sc}$, the routine proceeds to step 81, where the elapsed time $\Delta t$ from the previous processing cycle to the current processing cycle is added to the $\Sigma t1$, whereby the time $\Sigma t1$ during which $TC<T_{sc}$ is calculated. Next, at step 82, it is judged if the time $\Sigma t1$ exceeds the predetermined time tX1. When $\Sigma t1 \le tX1$, the routine jumps to step 89, while when $\Sigma t1 > tX1$, the routine proceeds to step 83, where a possibility flag showing that white smoke might be produced is set. Next, the routine proceeds to step 84, where $\Sigma t1$ is cleared, then the routine proceeds to step 89. That is, when the time $\Sigma t1$ during which $TC<T_{sc}$ exceeds tX1, it is judged that the SOF adsorption amount on the catalyst 25 exceeds the amount producing white smoke. Therefore, at this time, the possibility flag is set.

On the other hand, when it is judged at step 80 that $TC \ge T_{sc}$, the routine proceeds to step 85, where the elapsed time At from the previous processing cycle to the current processing cycle is added to the $\Sigma t2$, whereby the time $\Sigma t2$ during which $TC<T_{sc}$ is calculated. Next, at step 86, it is judged if the time $\Sigma t2$ exceeds the predetermined time tX2. When $\Sigma t2 \le tX2$, the routine jumps to step 89, while when $\Sigma t2 > tX2$, the routine proceeds to step 87, where the possibility flag showing that white smoke might be produced is reset. Next, the routine proceeds to step 88, where $\Sigma t2$ is cleared, then the routine proceeds to step 89. That is, when the time during which $TC \ge T_{sc}$ exceeds tX2, SOF adsorption amount on the catalyst 25 almost completely disappears and as a result the possibility flag is reset.

At step 89, it is judged if the possibility flag has been set. When the possibility flag has been set, the routine proceeds to step 90, where it is judged if the temperature TC of the catalyst 25 is higher than the lower limit $T_{sc}$ of the combustion of the SOF. When $TC>T_{sc}$, the routine proceeds to step 91, where the processing for increasing the exhaust gas amount is performed.

Next, another method of suppression of the production of white smoke will be explained.

As explained above, white smoke is produced when the amount of SOF adsorption becomes greater. Therefore, to suppress the white smoke, it is sufficient to prevent the SOF from being adsorbed as much as possible. In this case, if suppressing the production of SOF in the combustion chambers 5, it is possible to suppress the adsorption of SOF. The production of SOF in the combustion chambers 5 can be suppressed by reducing the EGR gas amount for example. That is, if reducing the EGR gas amount, sufficient air becomes present around the fuel particles injected into the combustion chambers 5 and therefore the production of SOF can be suppressed. Therefore, in the example shown in FIG. 12, when the SOF adsorption amount exceeds a predetermined amount GX, the EGR amount is reduced.

Note that it is also possible to suppress the production of SOF in the combustion chambers by advancing the injection timing, shortening the interval between the pilot injection and main injection, or stopping either the pilot injection or post injection performed after the main injection. Therefore, as shown in FIG. 12, when the SOF adsorption amount is more than a predetermined amount GX, it is also possible to advance the injection timing, shorten the interval between the pilot injection and main injection, or stop either the pilot injection or post injection.

Note that in this embodiment according to the present invention, the pilot injection is performed one or more times during one stroke in accordance with the engine operating state. When the pilot injection is performed a plurality of times, the interval between the pilot injection and main injection means the interval between the final pilot injection and the main injection, while stopping the pilot injection means stopping all pilot injections.

FIG. 13 shows an embodiment designed to calculate the SOF adsorption amount and reduce the EGR amount in the same way as the example shown in FIG. 12 when the calculated SOF adsorption amount exceeds the predetermined amount GX. Note that in this embodiment, after the idling operation is started, when the SOF adsorption amount exceeds the predetermined amount GX, the EGR amount is reduced. Even when no longer in idling operation, so long as the SOF adsorption amount is more than the predetermined amount GX, the EGR amount continues to be reduced. When the SOF adsorption amount becomes less than the predetermined amount, the EGR amount is increased up to an amount in accordance with the operating state.

Note that in the example shown in FIG. 13, when the EGR amount should be reduced, the EGR amount is made zero. That is, the recirculation of the EGR gas is stopped.

Further, instead of reducing the EGR amount in FIG. 13, it is also possible to advance the injection timing, shorten the interval between the pilot injection and main injection, or stop either the pilot injection or post injection.

FIG. 14 shows the processing routine of the SOF for working the embodiment shown in FIG. 13.

Referring to FIG. 14, first, at step 100, the SOF adsorption rate is calculated. The routine for calculating the SOF adsorption rate is shown in FIG. 15. Next, at step 200, the SOF adsorption speed is calculated. The routine for calculation of the SOF adsorption speed is shown in FIG. 20. Next, at step 300, the SOF adsorption amount is calculated. The routine for calculating the SOF adsorption amount is shown in FIG. 23. Next, at step 400, the EGR gas is controlled. The routine for control of the EGR gas is shown in FIG. 25.

Referring to the routine for calculation of the SOF adsorption rate shown in FIG. 15, first, at step 101, the temperature TCT of the catalyst serving as the reference at the steady state is calculated. This reference steady state catalyst temperature TCT is found in advance by experiments and is stored as a function of the fuel injection amount and engine speed in the form of a map as shown in FIG. 16 in advance in the ROM 42. Next, at step 102, the correction steady state catalyst temperature TCA is calculated by correcting the reference steady state catalyst temperature TCT based on the engine cooling water temperature etc. as shown in the following equation:

$$TCA=TCT+KTW+KTA+KSP$$

Here, KTW is a correction function of the engine cooling water TW as shown in FIG. 17(A), KTA is a correction function of the intake air temperature TA as shown in FIG. 17(B), and KSP is a correction coefficient of the vehicle speed SP as shown in FIG. 17(C). Note that if the vehicle speed SP rises, the catalyst 25 is cooled by the running air. Therefore, as shown in FIG. 17(C), the higher the vehicle speed SP, the smaller the correction coefficient KSP.

Next, at step 103, the current estimated temperature TCE of the catalyst 25 is calculated based on the following equation:

$$TCE=TCE_{n-1}+(TCA-TCE_{n-1})/\text{time constant}$$

Here, $TCE_{n-1}$ shows the estimated catalyst temperature TCE calculated at the time of the previous processing cycle. Further, the time constant, as shown in FIG. 18, is a function of the intake air amount GA. This time constant becomes larger when the intake air amount GA becomes smaller. In the above equation, ($TCA-TCE_{n-1}$)/time constant shows the tracking delay of the temperature of the catalyst 25. When the intake air amount GA is small, it shows that when the operating state changes, the temperature of the catalyst 25 slowly approaches the temperature of the catalyst 25 according to the new operating state. On the other hand, when the intake air amount GA becomes greater, the time constant becomes 1.0. At this time, TCE=TCA. That is, the calculated correction constant catalyst temperature TCA is made the estimated catalyst temperature TCE as it is.

Next, at step 104, the SOF adsorption rate $R_s$ according to the estimated catalyst temperature TCE is calculated from the relationship shown in FIG. 19. This SOF adsorption rate $R_s$ is substantially the same as shown in FIG. 5.

In this way, the estimated catalyst temperature TCE is calculated, and the SOF adsorption rate $R_s$ is calculated from the estimated catalyst temperature TCE. However, it is possible to directly detect the temperature TC of the catalyst 25 and calculate the SOF adsorption rate $R_s$ from the relationship shown in FIG. 5 based on the detected temperature TC.

Next, the routine for calculation of the SOF adsorption speed shown in FIG. 20 will be explained. Note that the SOF adsorption speed shows the SOF adsorption amount per second (g/sec).

Referring to FIG. 20, first, at step 201, the amount of SOF exhausted per second (g/sec) from the combustion chambers 5 is calculated. This SOF exhaust amount GSOF (g/sec) is found in advance by experiments and is stored as a function of the fuel injection amount and the engine speed in the form of a map shown in FIG. 21 in advance in the ROM 42. Next, at step 202, the correction coefficient KG for the SOF exhaust amount GSOF is calculated. The SOF exhaust amount GSOF is a function of the water temperature TW and the intake temperature TA. This SOF exhaust amount GSOF becomes greater the lower the water temperature TW and becomes greater the lower the intake temperature TA. Therefore, the correction coefficient KG is a function of the water temperature TW and the intake temperature TA and is stored in the form of a map as shown in FIG. 22 in advance in the ROM 42.

Next, at step 203, the reduction GR of the SOF exhausted from the combustion chambers 5 is calculated. For example, if the EGR amount is reduced, the amount of exhaust of SOF is reduced. This exhaust SOF reduction GR is calculated by the routine explained later. At step 203, the thus calculated exhaust SOF reduction GR is read.

Next, at step 204, the final SOF exhaust amount GSO (g/sec) is calculated based on the following equation:

$$GSO=GSOF \cdot KG-GR$$

Next, at step 205, the final SOF exhaust amount GSO (g/sec) is multiplied with the SOF adsorption rate $R_s$ so as to calculate the SOF adsorption speed SS (g/sec) (=$GSO \cdot R_s$).

Next, the routine for calculating the SOF adsorption amount shown in FIG. 23 will be explained.

Referring to FIG. 23, first, at step 301, the SOF combustion speed $R_{com}$ showing the amount of combustion per second (g/sec) of the SOF adsorbed on the catalyst 25 is calculated. This SOF combustion speed $R_{com}$ is a function of the estimated catalyst temperature TCE as shown in FIG. 24. When the estimated catalyst temperature TCE is about 120°C to 130°C or more, the speed becomes greater the higher the estimated catalyst temperature TCE.

Next, at step 302, the SOF combustion speed $R_{com}$ (g/sec) is subtracted from the SOF adsorption speed SS (g/sec) to calculate the fluctuation amount RSOF (g/sec) (=$SS-R_{com}$) per second of the SOF adsorbed on the catalyst 25. Next, at step 303, the SOF adsorption amount $GG_n$ is calculated based on the following equation:

$$GG_n=GG_{n-1}+RSOF \cdot \Delta t$$

Here, $GG_{n-1}$ shows the SOF adsorption amount at the time of the previous processing cycle. At shows the elapsed time from the previous processing cycle to the current processing cycle.

In this way, the SOF adsorption amount $GG_n$ is calculated. The calculated SOF adsorption amount $GG_n$ is stored in the backup RAM 45. Next, at step 304, the SOF adsorption amount $GG_n$ is guarded by the upper limit value $GG_{max}$ and the lower limit value $GG_{min}$. That is, when $GG_n<GG_{min}$, $GG_n$ is made $G_{min}$, while when $GG_n>GG_{max}$, $GG_n$ is made $GG_{max}$. In this embodiment, $GG_{min}$ is made 0.

Next, the routine for control of the EGR gas shown in FIG. 25 will be explained.

Referring to FIG. 25, first, at step 401, the EGR control coefficient KE is calculated. This EGR control coefficient KE is a function of the SOF adsorption amount $GG_n$ as shown in Fig. 26, and, when the SOF adsorption amount $GG_n$ is less than around 15 (g), KE becomes zero. In addition, when the SOF adsorption amount $GG_n$ is between about 15 (g) and about 25 (g), KE is increased from 0 to 1.0 as the SOF adsorption amount $GG_n$ is increased and, when the SOF adsorption amount $GG_n$ is more than around 25 (g), KE is made 1.0.

Next, at step 402, the correction air amount ΔGAO to be added to the target intake air amount GAO shown in FIG. 2(B) is calculated. This correction air amount ΔGAO is stored as a function of the fuel injection amount and engine speed in the form of a map as shown in FIG. 27 in advance in the ROM 42. As explained above, the EGR control valve 28 is controlled so that the intake air amount becomes the target intake air amount GAO. The correction air amount ΔGAO to be added to the target intake air amount GAO is set to a value where EGR control valve 28 becomes fully closed.

Next, at step 403, ΔGA·KE is added to the target intake air amount GAO shown in FIG. 2(B), whereby the final target intake air amount GAO is calculated. The EGR control valve 28 is controlled so that the intake air amount becomes this final target intake air amount GAO.

When KE=0, the target intake air amount GAO is as shown in FIG. 2(B). That is, as will be understood from FIG. 26, when the SOF adsorption amount $GG_n$ is a small amount of less than about 15 (g), no white smoke is produced. At this time, the EGR amount is not particularly reduced. On the other hand, when the SOF adsorption amount $GG_n$ becomes greater than about 25 (g) and KE=1.0, the correction air amount ΔGA is added as it is to the target intake air amount GAO shown in FIG. 2(B). As a result, the amount of intake air is increased, the recirculation of the EGR gas is stopped, and the amount of exhaust air is increased.

If the SOF adsorption amount $GG_n$ becomes greater in this way, the amount of exhaust air is increased, so the SOF is burned well and therefore the production of white smoke can be suppressed. Further, at this time, the recirculation of EGR gas is stopped, so the amount of exhaust of SOF from the combustion chambers 5 is reduced and therefore the adsorption of SOF on the catalyst 25 can be suppressed.

Next, at step 404, the reduction GRE in the SOF exhausted from the combustion chambers 5 when stopping the recirculation of EGR gas is calculated. The reference exhaust SOF reduction GRE is found in advance by experiments and is stored as a function of the fuel injection amount and the engine speed in the form of a map shown in FIG. 28 in advance in the ROM 42. Next, at step 405, by multiplying the reference exhaust SOF reduction GRE with the EGR control coefficient KE, the exhaust SOF reduction GR (=GRE·KE) is calculated. This exhaust SOF reduction GR is read at step 203 of FIG. 20.

In this way, in this embodiment, the adsorption of SOF is suppressed while suppressing production of white smoke by stopping the recirculation of EGR gas. FIG. 29 shows another processing routine for SOF simultaneously executed in addition to the action of stopping the EGR gas so as to further suppress the adsorption of SOF. In this processing routine, the injection timing is advanced to further suppress the adsorption of SOF. Note that steps 100, 200, and 300 in FIG. 29 are the same as steps 100, 200, and 300 shown in FIG. 14.

That is, referring to FIG. 29, first, at step 100, the SOF adsorption rate is calculated by the routine shown in FIG. 15. Next, at step 200, the SOF adsorption speed is calculated by the routine shown in FIG. 20. Next, at step 300, the SOF adsorption amount is calculated by the routine shown in FIG. 23. Next, at step 400, the injection is controlled. This injection control routine is shown in FIG. 30.

Referring to FIG. 30, first, at step 401, an injection timing control coefficient KI is calculated. This injection timing control coefficient KI, as shown in FIG. 31, is a function of the SOF adsorption amount $GG_n$. When the SOF adsorption amount $GG_n$ is smaller than about 15 (g), KI=0. When the SOF adsorption amount $GG_n$ is between about 15 (g) and about 25 (g), the coefficient is raised from 0 to 1.0 along with the increase of the SOF adsorption amount $GG_n$. When the SOF adsorption amount $GG_n$ is more than about 25 (g), KI is made 1.0.

Next, at step 402, the correction advance ΔIθ for advancing the predetermined injection timing Iθ in accordance with the engine operating state is calculated. This correction advance ΔIθ is stored as a function of the fuel injection amount and engine speed in the form of a map as shown in FIG. 32 in advance in the ROM 42. Next, at step 403, the injection timing advance Iθ is advanced by exactly the correction advance ΔIθ multiplied with the injection timing control coefficient KI.

When KI=0, the injection timing Iθ becomes the originally set timing. That is, as will be understood from FIG. 31, when the SOF adsorption amount $GG_n$ is a small amount of less than about 15 (g), the injection timing Iθ is not particularly advanced. On the other hand, when the SOF adsorption amount $GG_n$ becomes greater than about 25 (g) and KI=1.0, the injection timing Iθ is advanced by exactly the correction advance ΔIθ. When the injection timing Iθ is advanced, the amount of exhaust of SOF from the combustion chambers 5 is reduced and therefore adsorption of SOF on the catalyst 25 can be suppressed.

Next, at step 404, the reduction GRI of the SOF exhausted from a combustion chamber 5 when advancing the injection timing Iθ by exactly the correction advance ΔIθ is calculated. This reference exhaust SOF reduction GRI is found in advance from experiments and is stored as a function of the fuel injection amount and engine speed in the form of a map shown in FIG. 33 in advance in the ROM 42. Next, at step 405, the reference exhaust SOF reduction GRI is multiplied with the injection timing control coefficient KI to calculate the exhaust SOF reduction GR (=GRI·KI). This exhaust SOF reduction GR is read at step 203 of FIG. 20.

In the example shown in FIG. 30, when the adsorption of SOF should be suppressed, the injection timing Iθ is advanced. At this time, however, as explained above, instead of advancing the injection timing Iθ, it is also possible to shorten the interval between the pilot injection and the main injection or to stop either or the pilot injection or post injection.

Further, in the embodiment shown in FIG. 1, an oxidation catalyst 25 is arranged in the engine exhaust passage. However, instead of this oxidation catalyst 25, it is also possible to arrange an $NO_x$ storing

and reducing type three-way catalyst absorbing $NO_x$ in exhaust gas when the air-fuel ratio of the inflowing exhaust gas is lean and releasing and reducing the absorbed $NO_x$ when the air-fuel ratio of the inflowing exhaust gas becomes rich. Further, it is also possible to arrange a particulate filter instead of the oxidation catalyst 25 and possible to make the particulate filter carry the above $NO_x$ storing and reducing type three-way catalyst.

Summarizing the effects of the invention, according to the present invention, as explained above, it is possible to suppress the production of white smoke.

While the invention has been described with reference to specific embodiments chosen for purpose of illustration, it should be apparent that numerous modifications could be made thereto by those skilled in the art without departing from the basic concept and scope of the invention.

## Claims

**1.** An exhaust purification device in an internal combustion engine in which an exhaust purification catalyst is arranged in an engine exhaust passage and soluble organic fractions of particulate contained in exhaust gas are adsorbed and deposited on the catalyst when a temperature of the catalyst is lower than a lower limit temperature of combustion of said soluble organic fractions, said device comprising:

judging means for judging if white smoke might be produced by the soluble organic fractions adsorbed on the catalyst and
exhaust air control means for increasing the amount of exhaust air exhausted from the engine when it is judged that white smoke might be produced.

**2.** An exhaust purification device of an internal combustion engine as set forth in claim 1, wherein said judging means judges if white smoke might be produced when it is judged that an amount of adsorption of soluble organic fractions on a catalyst is more than a predetermined amount.

**3.** An exhaust purification device of an internal combustion engine as set forth in claim 1, wherein said judging means judges that white smoke might be produced when it is judged that an amount of adsorption of soluble organic fractions on the catalyst is more than a predetermined amount and it is judged that a temperature of the catalyst is higher than a lower limit temperature of combustion of said soluble organic fractions.

**4.** An exhaust purification device of an internal combustion engine as set forth in claim 1, wherein said judging means judges that white smoke might be produced when it is judged that an amount of adsorption of soluble organic fractions on the catalyst is more than a predetermined amount and an engine load is increased by more than a predetermined increase speed.

**5.** An exhaust purification device of an internal combustion engine as set forth in any one of claims 2 to 4, wherein it is judged that an amount of adsorption of the soluble organic fractions on the catalyst is more than a predetermined amount when the engine is operated for more than a predetermined time in the state where the temperature of the catalyst is lower than the low limit temperature of combustion of the soluble organic fractions.

**6.** An exhaust purification device of an internal combustion engine as set forth in any one of claims 2 to 4, wherein it is judged that an amount of adsorption of the soluble organic fractions on the catalyst is more than a predetermined amount when idling operation is continued for more than a predetermined time.

**7.** An exhaust purification device of an internal combustion engine as set forth in any one of claims 2 to 4, further comprising calculating means for calculating an adsorption speed of soluble organic fractions on the catalyst and a combustion speed of the soluble organic fractions on the catalyst and for calculating an amount of adsorption of the soluble organic fractions on the catalyst based on the adsorption speed and the combustion speed.

**8.** An exhaust purification device of an internal combustion engine as set forth in claim 1, wherein said exhaust air control means increases the amount of exhaust air by reducing an exhaust gas recirculation amount.

**9.** An exhaust purification device of an internal combustion engine as set forth in claim 1, wherein said exhaust air control means increases the amount of exhaust air by raising the engine speed.

**10.** An exhaust purification device of an internal combustion engine as set forth in claim 1, further comprising:

judging means for judging if an amount of adsorption of soluble organic fractions on the catalyst is more than a predetermined amount and soluble organic fraction exhaust control means for reducing an amount of exhaust of soluble organic fractions from a combustion chamber when it is judged that an amount of adsorption of soluble organic fractions on the catalyst is more than a predetermined amount.

**11.** An exhaust purification device of an internal combustion engine as set forth in claim 10, wherein said soluble organic fraction exhaust control means reduces the amount of exhaust of soluble organic fractions from combustion chambers by reducing the amount of exhaust gas recirculation in an engine intake passage.

**12.** An exhaust purification device of an internal combustion engine as set forth in claim 10, wherein said soluble organic fraction exhaust control means reduce the amount of exhaust of the soluble organic fractions from combustion chambers by at least one of advancing an injection timing, shortening an interval between a pilot injection and main injection, and stopping either of the pilot injection and post injection.

**Patentansprüche**

**1.** Abgas-Reinigungsvorrichtung in einem Verbrennungsmotor, in der ein Abgas-Reinigungskatalysator in einem Motor-Abgasdurchlaß angeordnet ist, und lösliche organische Fraktionen von Partikeln, die im Abgas enthalten sind, adsorbiert und auf dem Katalysator abgelagert werden, wenn eine Temperatur des Katalysators geringer ist als eine untere Grenztemperatur der Verbrennung der löslichen organischen Fraktionen, wobei die Vorrichtung enthält:

eine Beurteilungseinrichtung zur Beurteilung, ob weißer Rauch durch die löslichen organischen Fraktionen, die auf dem Katalysator adsorbiert sind, erzeugt werden könnte, und

eine Abluft-Steuereinrichtung zur Vergrößerung der Menge an Abluft, die vom Motor abgegeben wird, wenn beurteilt wird, daß weißer Rauch erzeugt werden könnte.

**2.** Abgas-Reinigungsvorrichtung eines Verbrennungsmotors nach Anspruch 1, wobei die Beurteilungseinrichtung beurteilt, ob weißer Rauch erzeugt werden könnte, wenn beurteilt wird, daß eine Adsorptionsmenge von löslichen organischen Fraktionen auf einem Katalysator größer als eine vorbestimmte Menge ist.

**3.** Abgas-Reinigungsvorrichtung eines Verbrennungsmotors nach Anspruch 1, wobei die Beurteilungseinrichtung beurteilt, daß weißer Rauch erzeugt werden könnte, wenn beurteilt wird, daß eine Adsorptionsmenge von löslichen organischen Fraktionen auf dem Katalysator größer als eine vorbestimmte Menge ist, und beurteilt wird, daß eine Temperatur des Katalysators höher als eine untere Grenztemperatur der Verbrennung der löslichen organischen Fraktionen ist.

**4.** Abgas-Reinigungsvorrichtung eines Verbrennungsmotors nach Anspruch 1, wobei die Beurteilungseinrichtung beurteilt, daß weißer Rauch erzeugt werden könnte, wenn beurteilt wird, daß eine Adsorptionsmenge von löslichen organischen Fraktionen auf dem Katalysator größer als eine vorbestimmte Menge ist, und eine Motorlast um mehr als eine vorbestimmte Zunahmegeschwindigkeit zunimmt.

**5.** Abgas-Reinigungsvorrichtung eines Verbrennungsmotors nach einem der Ansprüche 2 bis 4, wobei beurteilt wird, daß eine Adsorptionsmenge der löslichen organischen Fraktionen auf dem Katalysator größer als eine vorbestimmte Menge ist, wenn der Motor länger als eine vorbestimmte Zeit im Zustand betrieben wird, bei dem die Temperatur des Katalysators geringer als eine untere Grenztemperatur der Verbrennung der löslichen organischen Fraktionen ist.

**6.** Abgas-Reinigungsvorrichtung eines Verbrennungsmotors nach einem der Ansprüche 2 bis 4, wobei beurteilt wird, daß eine Adsorptionsmenge der löslichen organischen Fraktionen auf dem Katalysator größer als eine vorbestimmte Menge ist, wenn ein Leerlaufbetrieb für länger als eine vorbestimmte Zeit fortgesetzt wird.

**7.** Abgas-Reinigungsvorrichtung eines Verbrennungsmotors nach einem der Ansprüche 2 bis 4, die ferner eine Berechnungseinrichtung zur Berechnung einer Adsorptionsgeschwindigkeit der löslichen organischen Fraktionen auf dem Katalysator und einer Verbrennungsgeschwindigkeit der löslichen organischen Fraktionen auf dem Katalysator und zur Berechnung einer Adsorptionsmenge der löslichen organischen Fraktionen auf dem Katalysator auf Basis der Adsorptionsgeschwindigkeit und der Verbrennungsgeschwindigkeit enthält.

**8.** Abgas-Reinigungsvorrichtung eines Verbrennungsmotors nach Anspruch 1, wobei die Abluft-Steuereinrichtung die Menge der Abluft durch Herabsetzen einer Abgas-Rückführmenge vergrößert.

**9.** Abgas-Reinigungsvorrichtung eines Verbrennungsmotors nach Anspruch 1, wobei die Abluft-Steuereinrichtung die Menge der Abluft durch Erhöhen der Motordrehzahl vergrößert.

**10.** Abgas-Reinigungsvorrichtung eines Verbrennungsmotors nach Anspruch 1, die ferner enthält:

eine Beurteilungseinrichtung zur Beurteilung, ob eine Adsorptionsmenge von löslichen organischen Fraktionen auf dem Katalysator mehr als eine vorbestimmte Menge ist, und

eine Steuereinrichtung für Abgas mit löslichen organischen Fraktionen zur Herabsetzung der Menge von löslichen organischen Fraktionen im Abgas aus einer Brennkammer, wenn beurteilt wird, daß eine Adsorptionsmenge von löslichen organischen Fraktionen auf dem Katalysator größer als eine vorbestimmte Menge ist.

**11.** Abgas-Reinigungsvorrichtung eines Verbrennungsmotors nach Anspruch 10, wobei die Steuereinrichtung für Abgas mit löslichen organischen Fraktionen die Menge von löslichen organischen Fraktionen im Abgas aus den Brennkammern durch Herabsetzen der Abgas-Rückführmenge in einem Motor-Einlaßdurchlaß herabsetzt.

**12.** Abgas-Reinigungsvorrichtung eines Verbrennungsmotors nach Anspruch 10, wobei die Steuereinrichtung für Abgas mit löslichen organischen Fraktionen die Menge der löslichen organischen Fraktionen im Abgas aus den Brennkammern durch Vorverlegen eines Einspritzzeitpunkts, Verkürzung einer Zeitspanne zwischen einer Voreinspritzung und einer Haupteinspritzung und/oder Beenden entweder der Voreinspritzung oder der Nacheinspritzung herabsetzt.

**Revendications**

**1.** Dispositif de purification d'échappement dans un moteur à combustion interne, dans lequel un catalyseur de purification d'échappement est agencé dans une conduite d'échappement de moteur et des fractions organiques solubles de microparticules contenues dans le gaz d'échappement sont adsorbées et déposées sur le catalyseur lorsqu'une température du catalyseur est inférieure à une température limite inférieure de combustion desdites fractions organiques solubles, ledit dispositif comprenant :

un moyen d'estimation destiné à estimer si de la fumée blanche pourrait être produite par les fractions organiques solubles adsorbées sur le catalyseur et
un moyen de commande d'air d'échappement destiné à augmenter la quantité de l'air d'échappement refoulé du moteur lorsqu'il est estimé que de la fumée blanche pourrait être produite.

**2.** Dispositif de purification d'échappement d'un moteur à combustion interne selon la revendication 1, dans lequel ledit moyen d'estimation estime si de la fumée blanche pourrait être produite lorsqu'il est estimé qu'une quantité d'adsorption de fractions organiques solubles sur un catalyseur est supérieure à une quantité prédéterminée.

**3.** Dispositif de purification d'échappement d'un moteur à combustion interne selon la revendication 1, dans lequel ledit moyen d'estimation estime que de la fumée blanche pourrait être produite lorsqu'il est estimé qu'une quantité d'adsorption de fractions organiques solubles sur le catalyseur est supérieure à une quantité prédéterminée et il est estimé qu'une température du catalyseur est supérieure à une température limite inférieure de combustion desdites fractions organiques solubles.

**4.** Dispositif de purification d'échappement d'un moteur à combustion interne selon la revendication 1, dans lequel ledit moyen d'estimation estime que de la fumée blanche pourrait être produite lorsqu'il est estimé qu'une quantité d'adsorption de fractions organiques solubles sur le catalyseur est supérieure à une quantité prédéterminée et qu'une charge du moteur est augmentée à une vitesse supérieure à une vitesse d'augmentation prédéterminée.

**5.** Dispositif de purification d'échappement d'un moteur à combustion interne selon l'une quelconque des revendications 2 à 4, dans lequel il est estimé qu'une quantité d'adsorption des fractions organiques solubles sur le catalyseur est supérieure à une quantité prédéterminée lorsque le moteur est mis en oeuvre pendant plus d'un temps prédéterminé dans l'état où la température du catalyseur est inférieure à la température limite basse de combustion des fractions organiques solubles.

**6.** Dispositif de purification d'échappement d'un moteur à combustion interne selon l'une quelconque des revendications 2 à 4, dans lequel il est estimé qu'une quantité d'adsorption des fractions organiques solubles sur le catalyseur est supérieure à une quantité prédéterminée lorsqu'un fonctionnement au ralenti est poursuivi pendant plus d'une durée prédéterminée.

**7.** Dispositif de purification d'échappement d'un moteur à combustion interne selon l'une quelconque des revendications 2 à 4, comprenant en outre un moyen de calcul destiné à calculer une vitesse d'adsorption des fractions organiques solubles sur le catalyseur et une vitesse de combustion des fractions organiques solubles sur le catalyseur et destiné à calculer une quantité d'adsorption des fractions organiques solubles sur le catalyseur d'après la vitesse d'adsorption et la vitesse de combustion.

**8.** Dispositif de purification d'échappement d'un moteur à combustion interne selon la revendication 1, dans lequel ledit moyen de commande d'air d'échappement augmente la quantité de l'air d'échappement en réduisant une quantité de recirculation de gaz d'échappement.

**9.** Dispositif de purification d'échappement d'un moteur à combustion interne selon la revendication 1, dans lequel ledit moyen de commande d'air d'échappement augmente la quantité de l'air d'échappement en augmentant le régime du moteur.

**10.** Dispositif de purification d'échappement d'un moteur à combustion interne selon la revendication 1, comprenant en outre :

un moyen d'estimation destiné à estimer si une quantité d'adsorption de fractions organiques solubles sur le catalyseur est supérieure à une quantité prédéterminée et
un moyen de commande d'évacuation de fractions organiques solubles destiné à réduire une quantité d'évacuation de fractions organiques solubles provenant d'une chambre de combustion lorsqu'il est estimé qu'une quantité d'adsorption de fractions organiques solubles sur le catalyseur est supérieure à une quantité prédéterminée.

**11.** Dispositif de purification d'échappement d'un moteur à combustion interne selon la revendication 10, dans lequel ledit moyen de commande d'évacuation de fractions organiques solubles réduit la quantité d'évacuation des fractions organiques solubles depuis les chambres de combustion en réduisant la quantité de recirculation de gaz d'échappement dans une conduite d'admission du moteur.

**12.** Dispositif de purification d'échappement d'un moteur à combustion interne selon la revendication 10, dans lequel ledit moyen de commande d'évacuation des fractions organiques solubles réduit la quantité d'évacuation des fractions organiques solubles provenant des chambres de combustion par au moins une action parmi, une avance d'un instant d'injection, une réduction d'un intervalle entre une injection pilote et une injection principale et d'un arrêt, de l'une ou l'autre de l'injection pilote et de la post-injection.

Fig.1

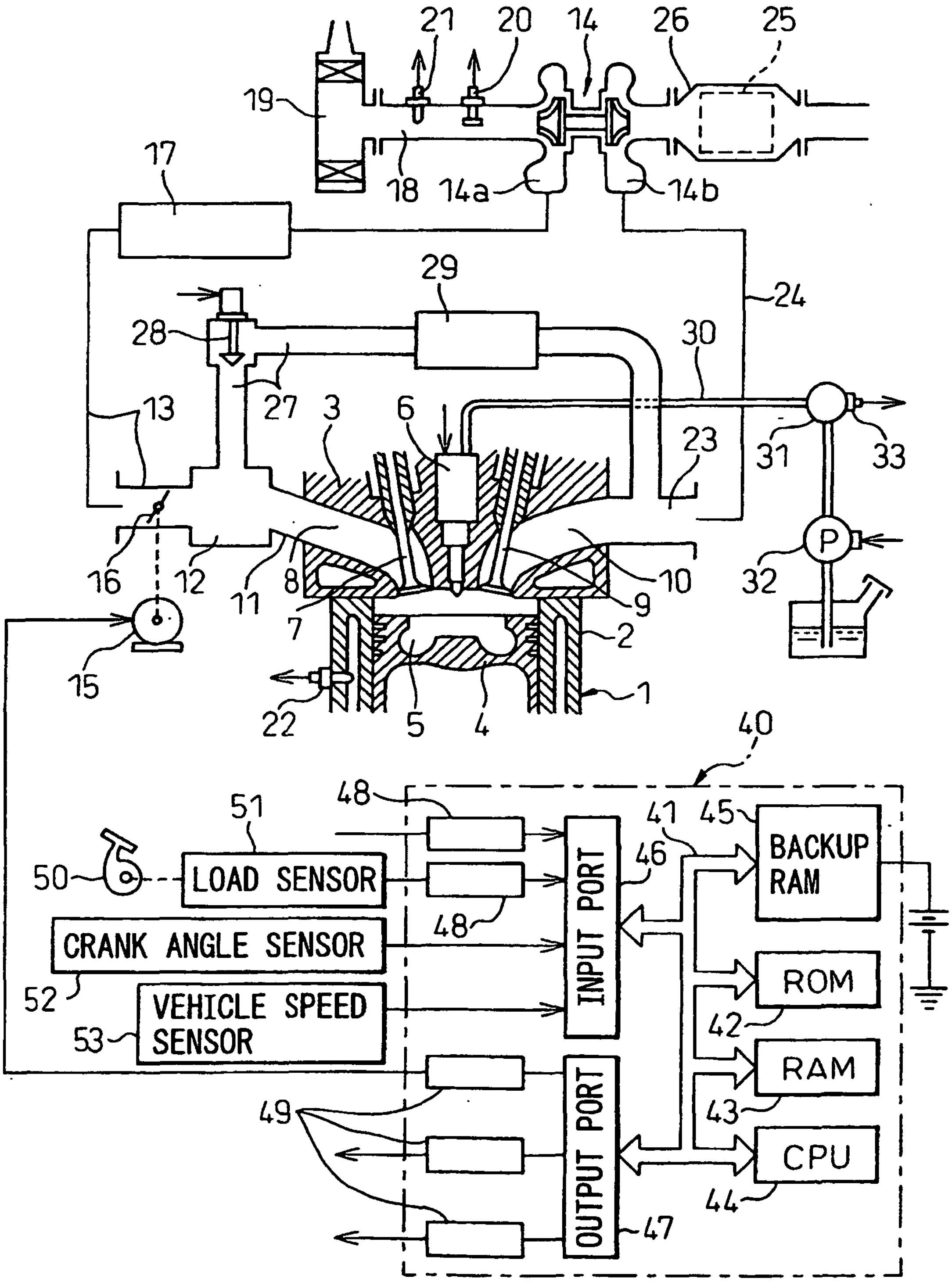
LOAD SENSOR
CRANK ANGLE SENSOR
VEHICLE SPEED SENSOR
INPUT PORT
OUTPUT PORT
BACKUP RAM
ROM
RAM
CPU

Fig. 2

(A)

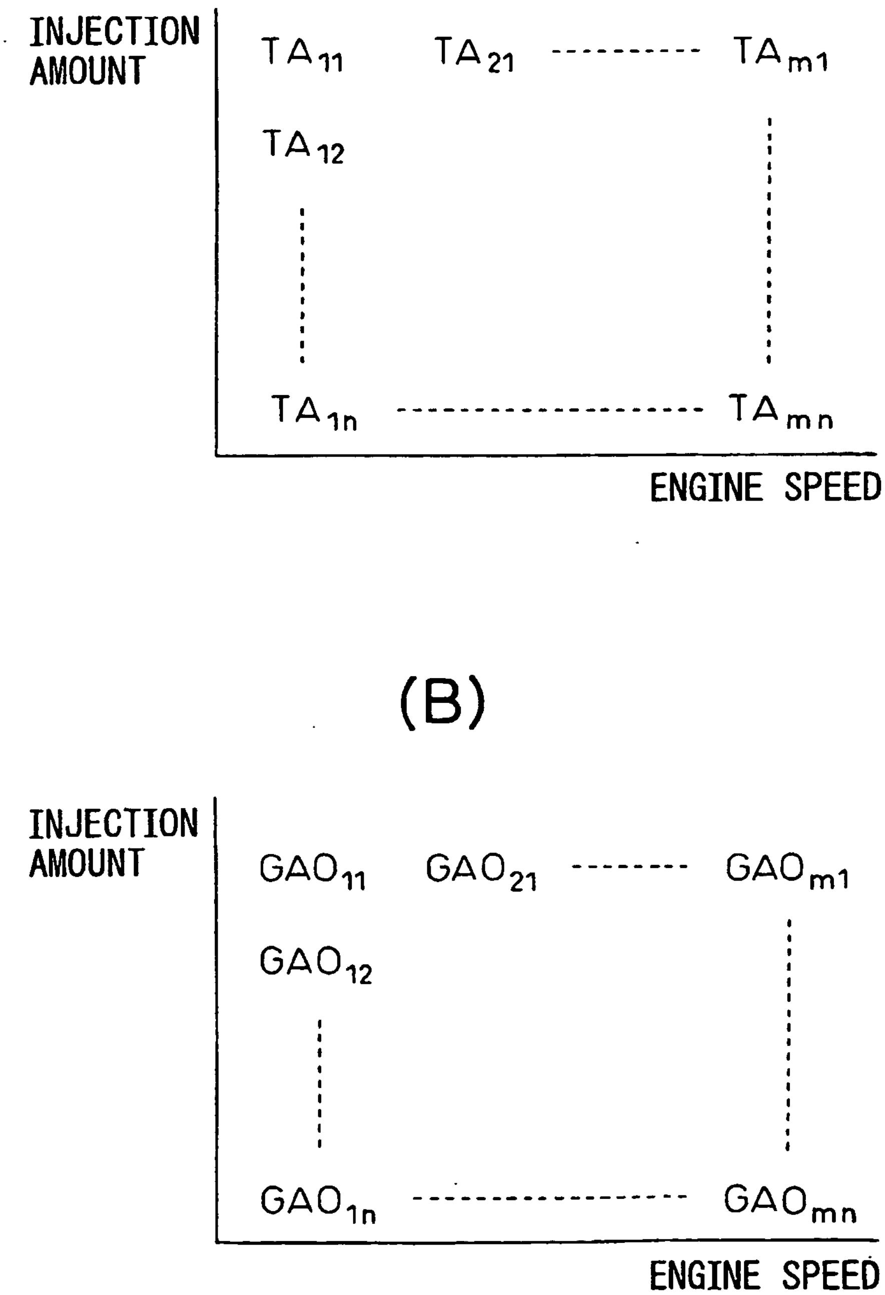
INJECTION AMOUNT
TA11 TA21 TAm1
TA12
TA1n TAmn
ENGINE SPEED
(B)
INJECTION AMOUNT
GAO11 GAO21 GAOm1
GAO12
GAO1n GAOmn
ENGINE SPEED

Fig.3

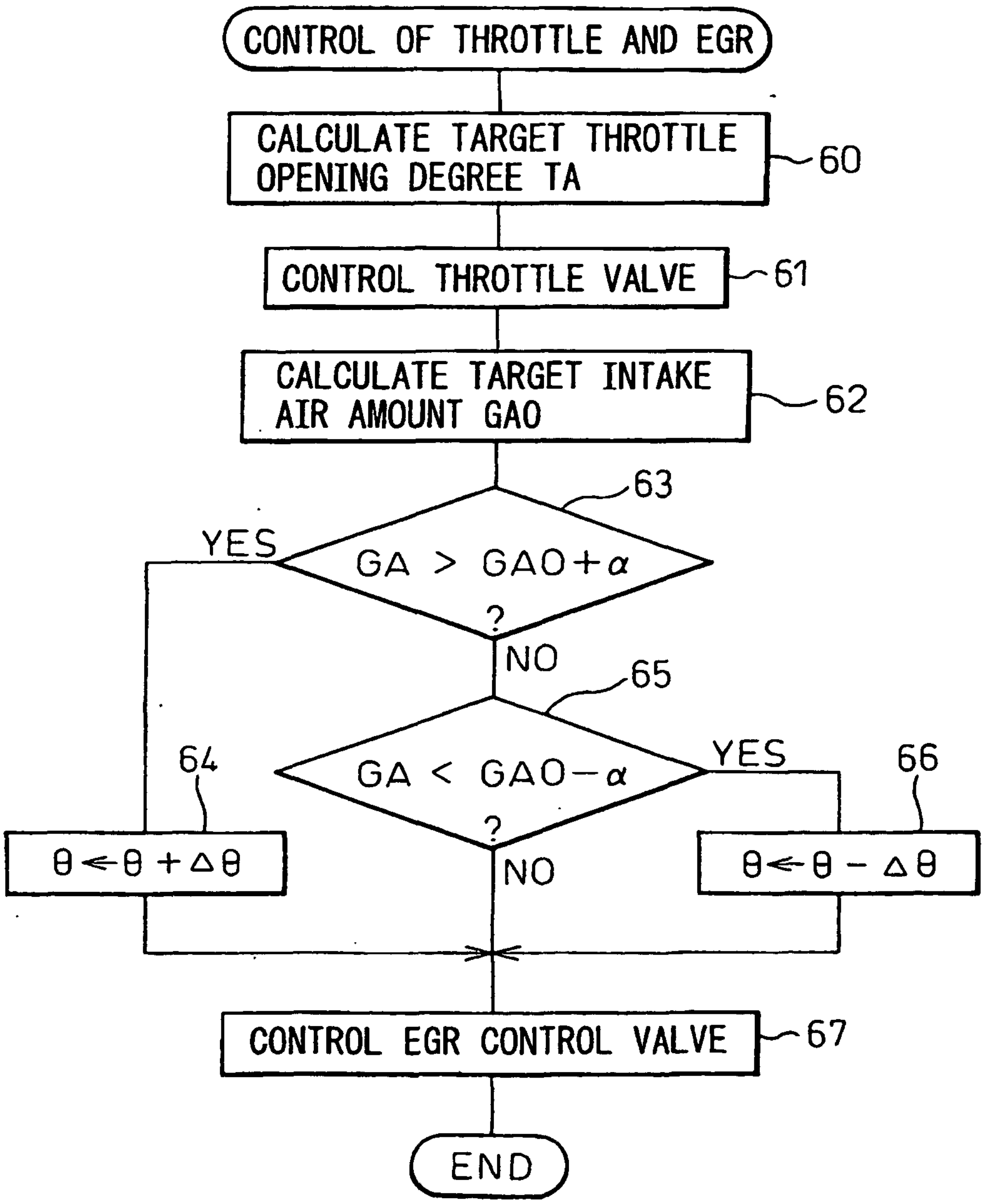
CONTROL OF THROTTLE AND EGR
CALCULATE TARGET THROTTLE OPENING DEGREE TA
60
CONTROL THROTTLE VALVE
61
CALCULATE TARGET INTAKE AIR AMOUNT GAO
62
63
GA > GAO+α ?
YES
NO
65
GA < GAO−α ?
YES
NO
64
θ←θ+Δθ
66
θ←θ−Δθ
CONTROL EGR CONTROL VALVE
67
END

Fig. 4

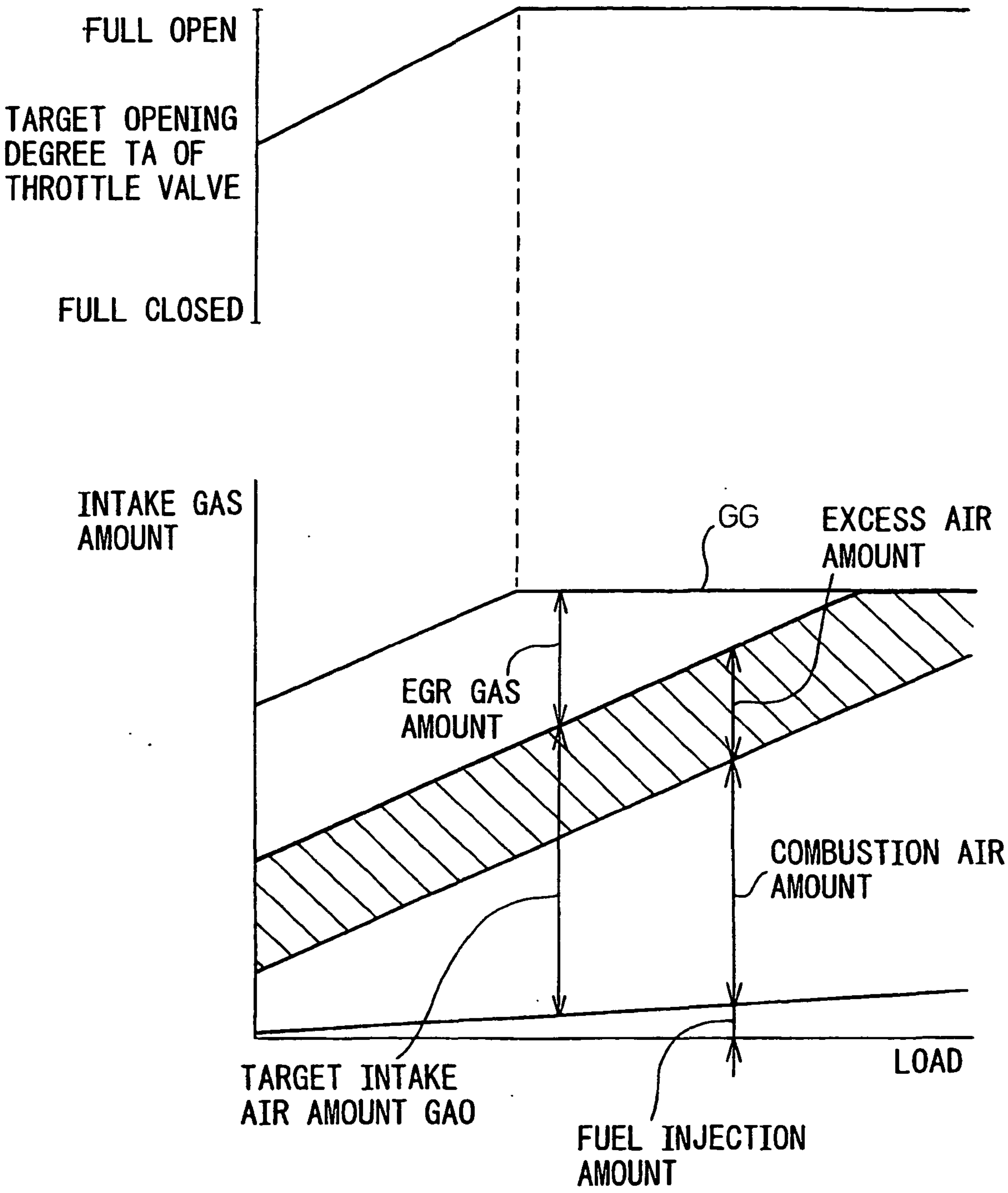
FULL OPEN
TARGET OPENING DEGREE TA OF THROTTLE VALVE
FULL CLOSED
INTAKE GAS AMOUNT
GG
EXCESS AIR AMOUNT
EGR GAS AMOUNT
COMBUSTION AIR AMOUNT
LOAD
TARGET INTAKE AIR AMOUNT GAO
FUEL INJECTION AMOUNT

Fig.5

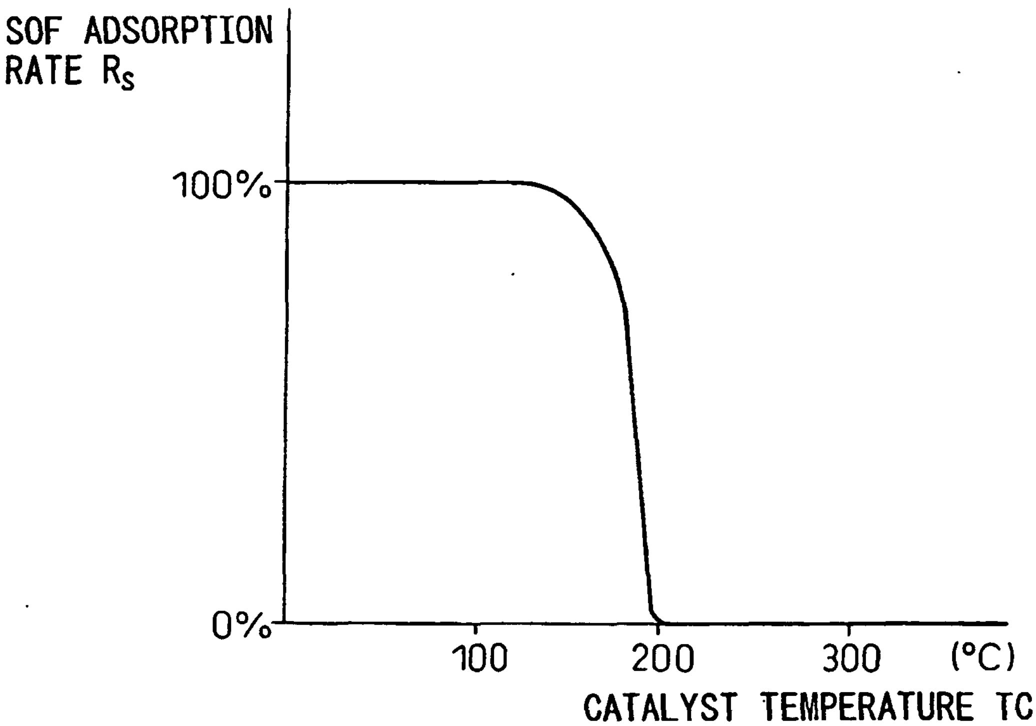
SOF ADSORPTION
RATE $R_S$
100%
0%
100
200
300
(°C)
CATALYST TEMPERATURE TC

Fig.6

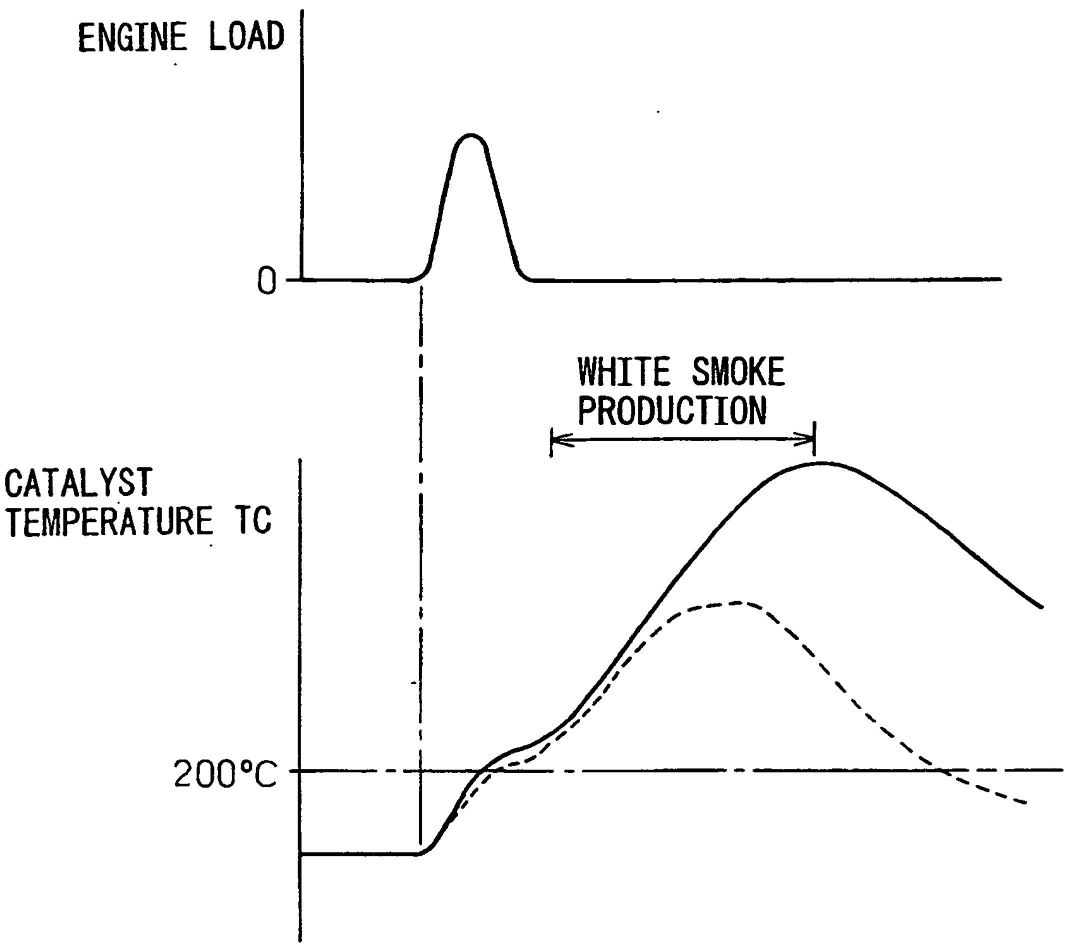
ENGINE LOAD
0
WHITE SMOKE PRODUCTION
CATALYST TEMPERATURE TC
200°C

Fig.7

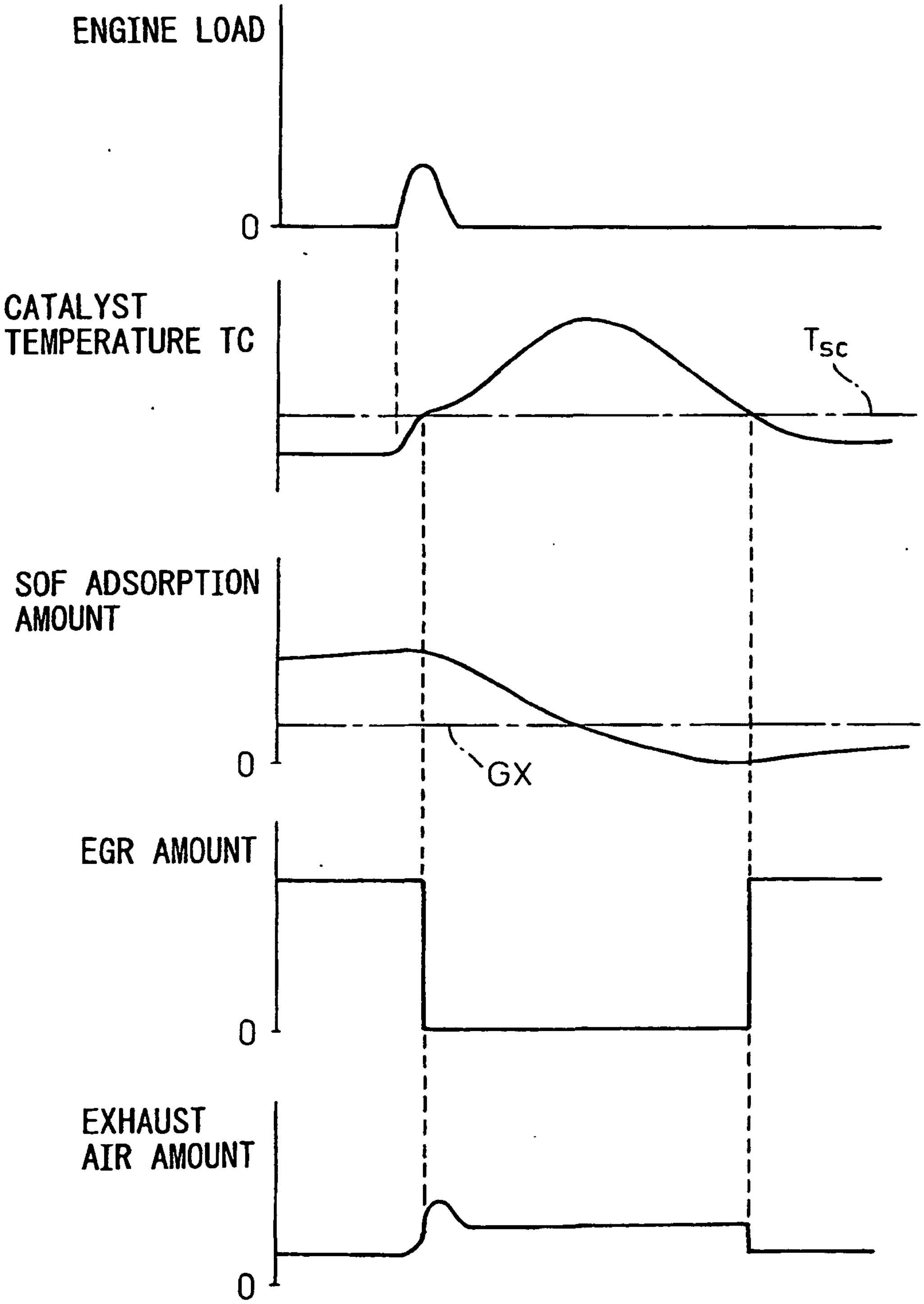
ENGINE LOAD
0
CATALYST
TEMPERATURE TC
Tsc
SOF ADSORPTION
AMOUNT
0
GX
EGR AMOUNT
0
EXHAUST
AIR AMOUNT
0

Fig.8

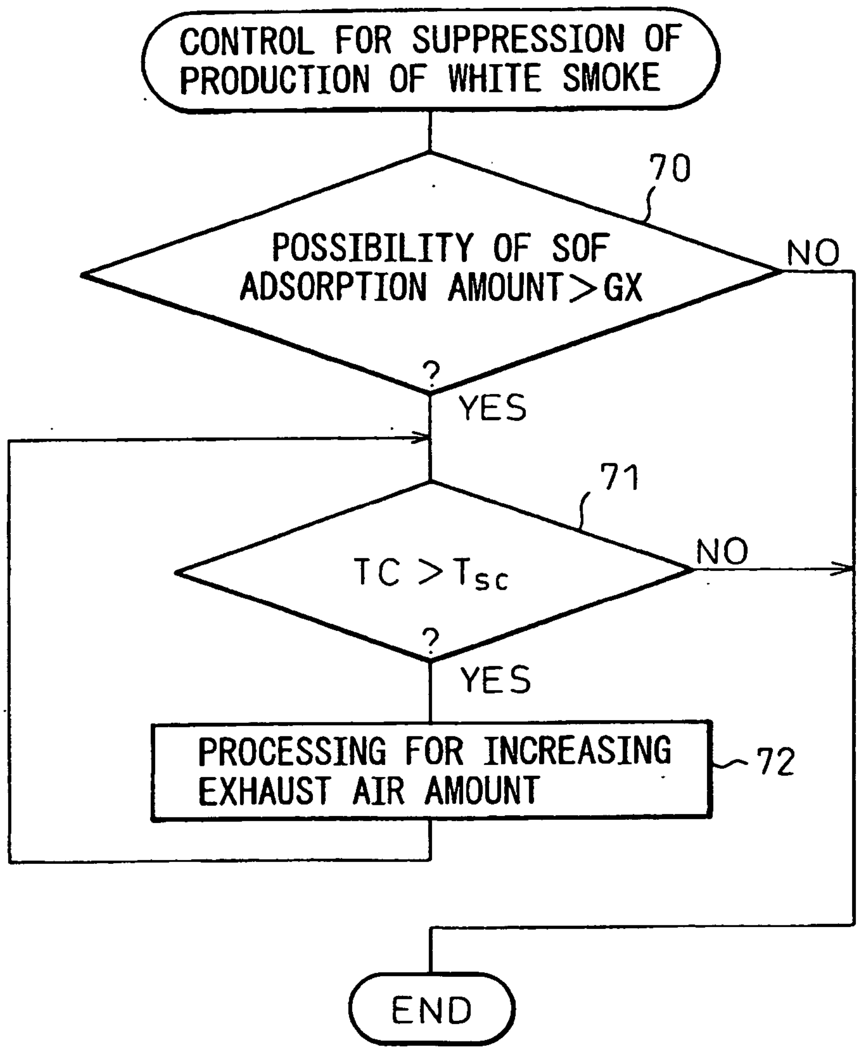
CONTROL FOR SUPPRESSION OF PRODUCTION OF WHITE SMOKE
70
POSSIBILITY OF SOF ADSORPTION AMOUNT>GX ?
NO
YES
71
TC >Tsc ?
NO
YES
PROCESSING FOR INCREASING EXHAUST AIR AMOUNT
72
END

Fig.9

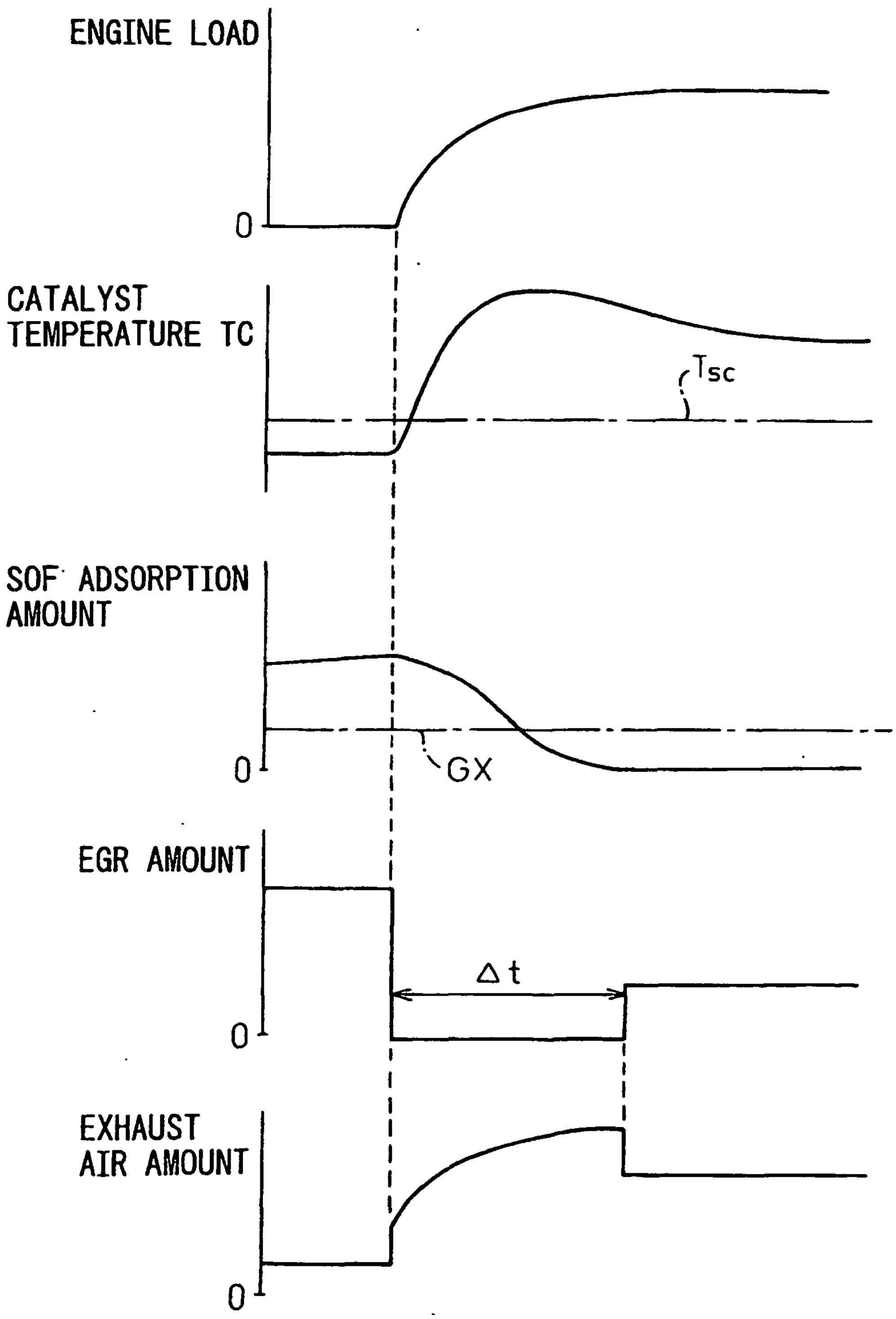
ENGINE LOAD
0
CATALYST TEMPERATURE TC
Tsc
SOF ADSORPTION AMOUNT
0
GX
EGR AMOUNT
Δt
0
EXHAUST AIR AMOUNT
0

Fig.10

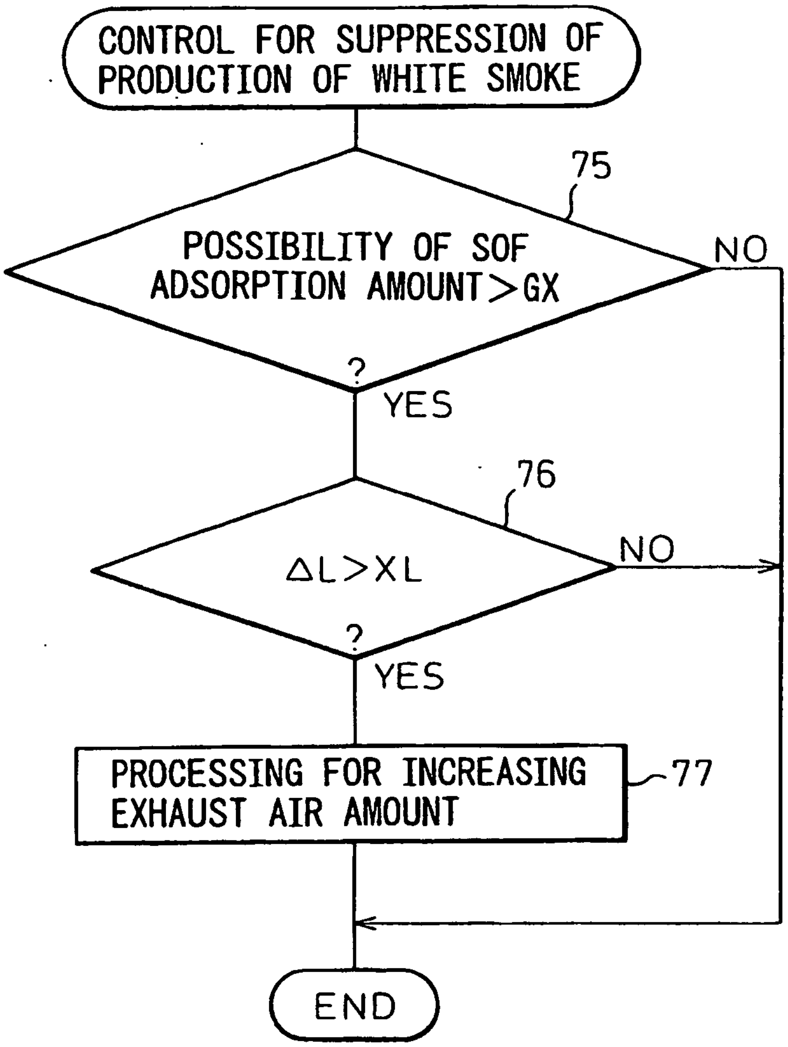
CONTROL FOR SUPPRESSION OF PRODUCTION OF WHITE SMOKE
75
POSSIBILITY OF SOF ADSORPTION AMOUNT>GX ?
NO
YES
76
ΔL>XL ?
NO
YES
PROCESSING FOR INCREASING EXHAUST AIR AMOUNT
77
END

Fig.11

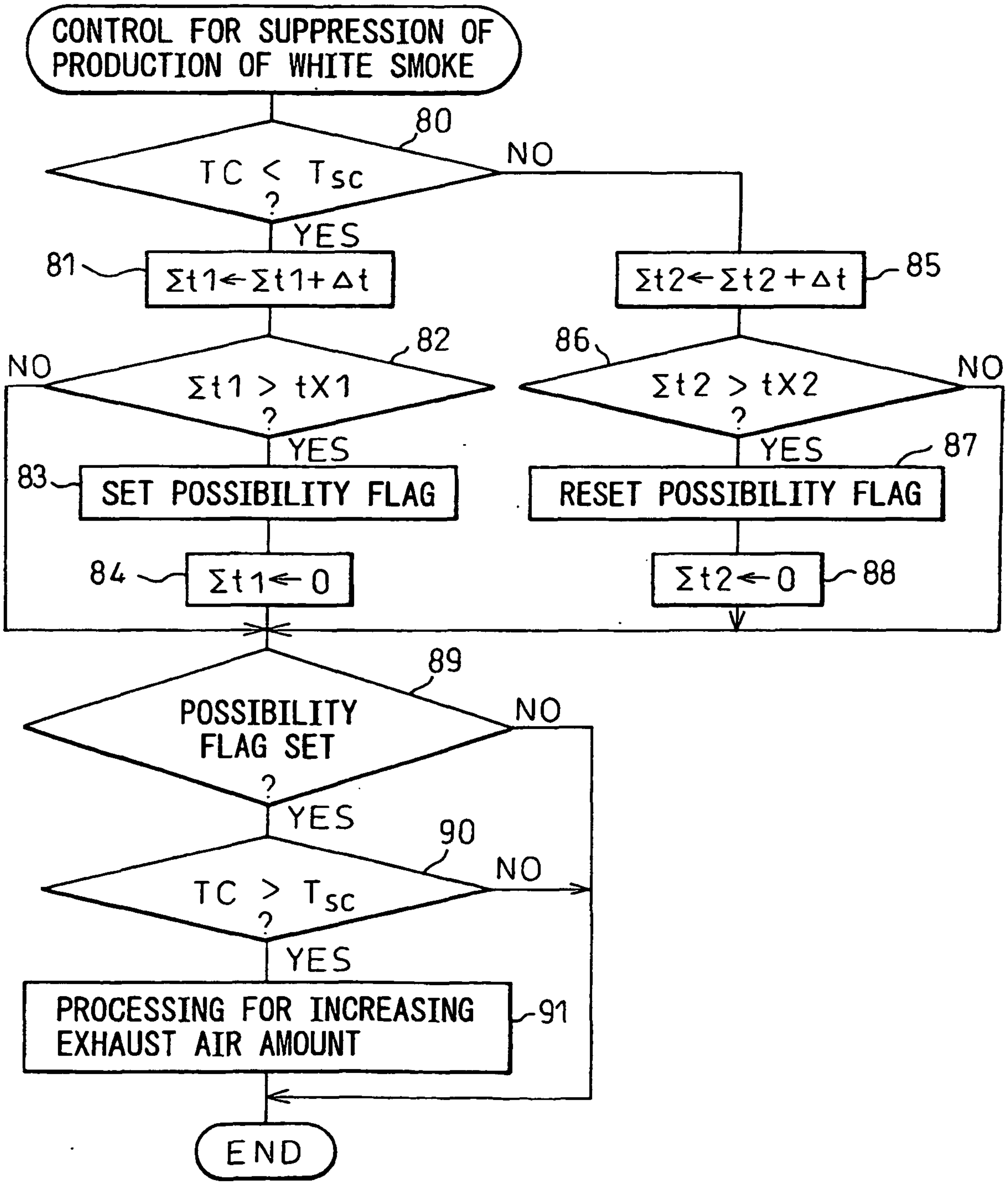
CONTROL FOR SUPPRESSION OF PRODUCTION OF WHITE SMOKE
80
TC < Tsc ?
NO
YES
81
Σt1←Σt1+Δt
85
Σt2←Σt2+Δt
82
Σt1 > tX1 ?
86
Σt2 > tX2 ?
NO
NO
YES
YES
83
SET POSSIBILITY FLAG
87
RESET POSSIBILITY FLAG
84
Σt1←0
88
Σt2←0
89
POSSIBILITY FLAG SET ?
NO
YES
90
TC > Tsc ?
NO
YES
PROCESSING FOR INCREASING EXHAUST AIR AMOUNT
91
END

Fig.12

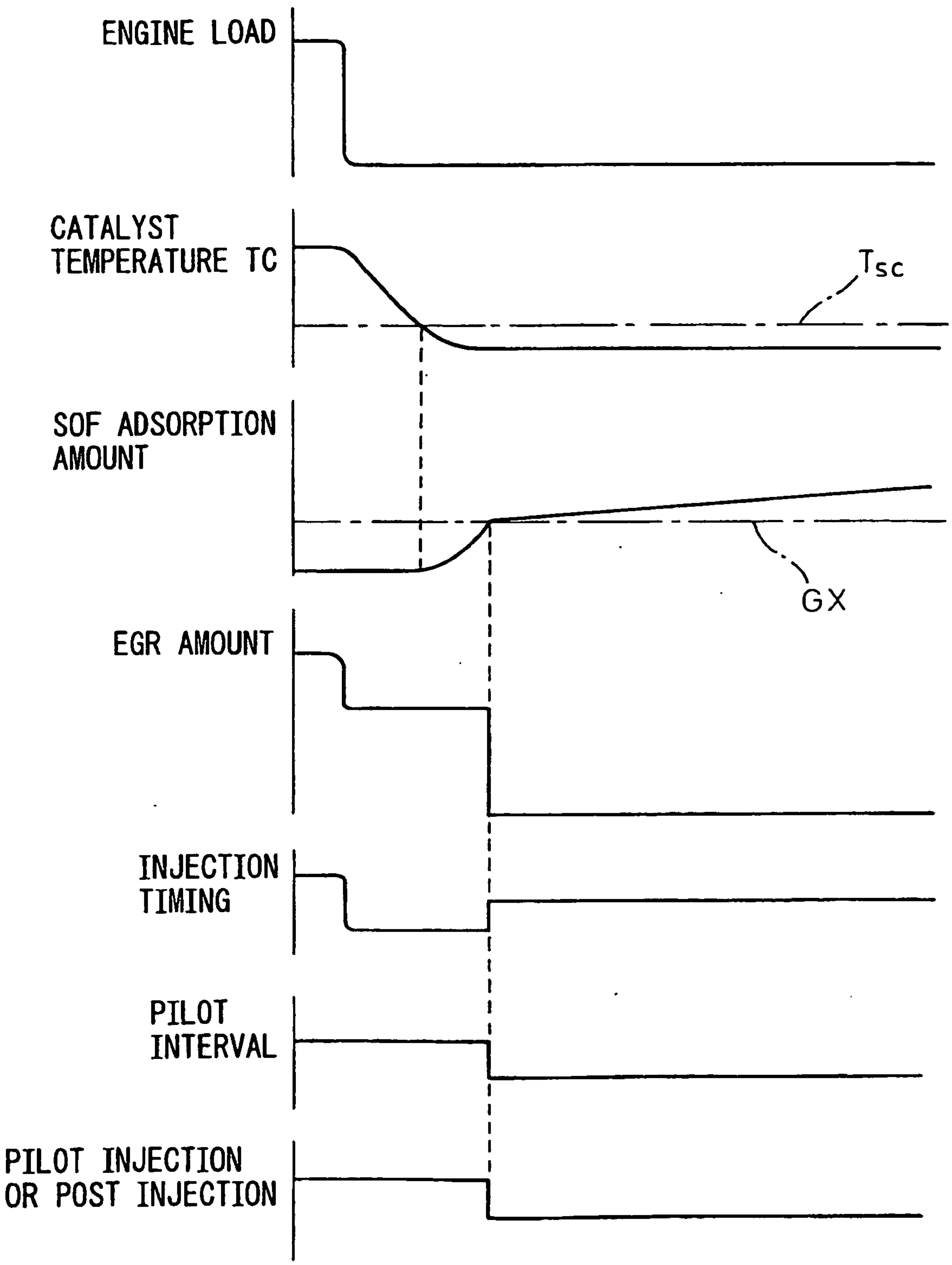
ENGINE LOAD
CATALYST TEMPERATURE TC
Tsc
SOF ADSORPTION AMOUNT
GX
EGR AMOUNT
INJECTION TIMING
PILOT INTERVAL
PILOT INJECTION OR POST INJECTION

Fig.13

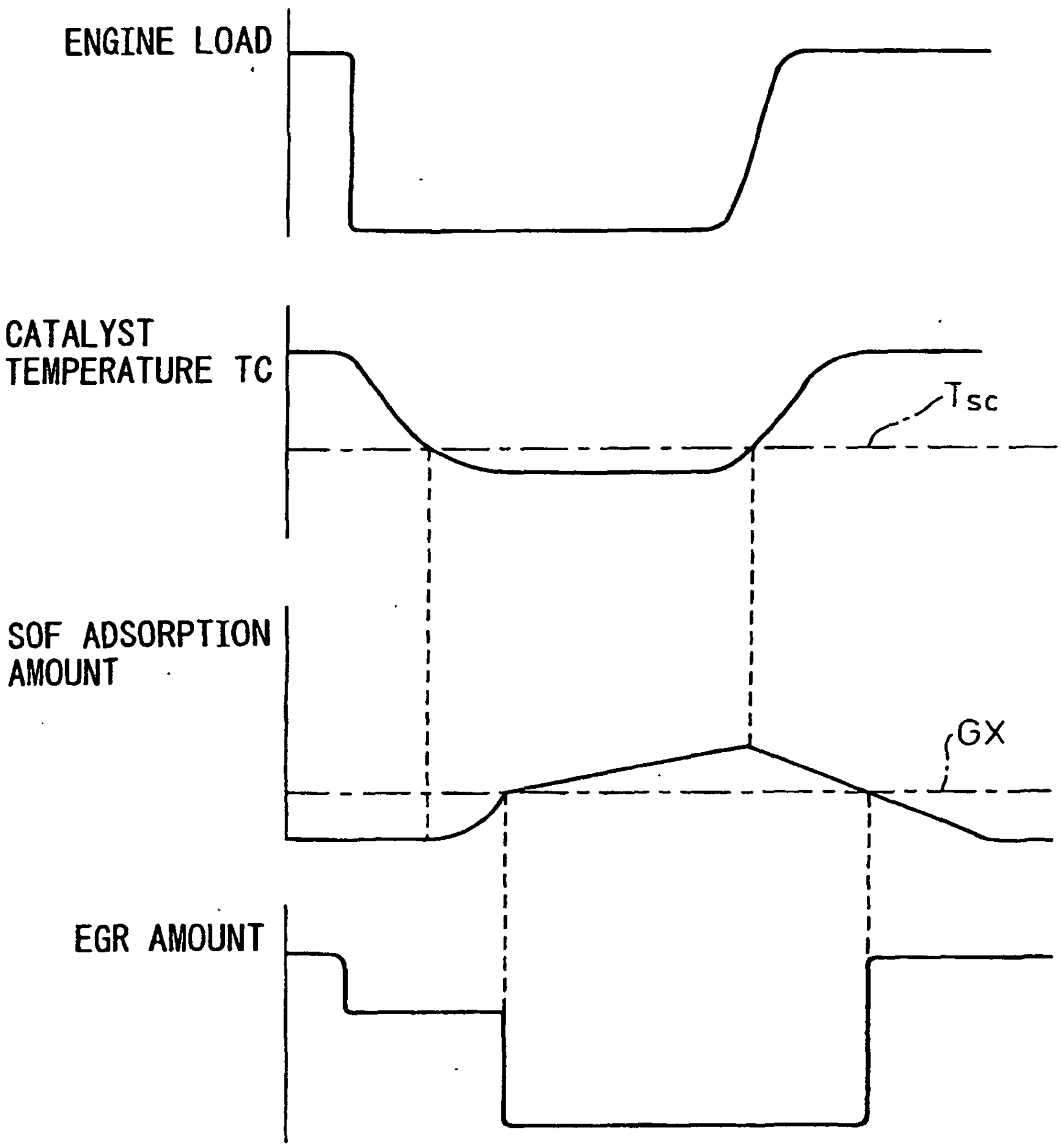
ENGINE LOAD
CATALYST TEMPERATURE TC
Tsc
SOF ADSORPTION AMOUNT
GX
EGR AMOUNT

Fig.14

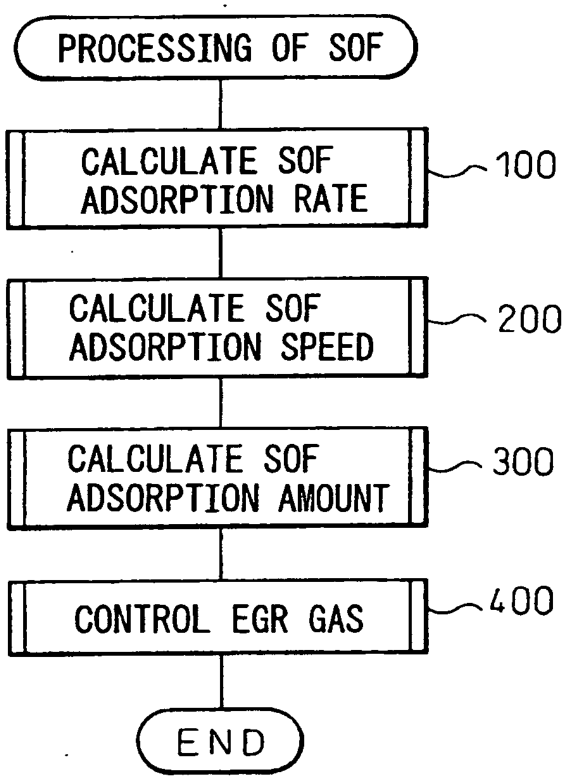
PROCESSING OF SOF
CALCULATE SOF ADSORPTION RATE
100
CALCULATE SOF ADSORPTION SPEED
200
CALCULATE SOF ADSORPTION AMOUNT
300
CONTROL EGR GAS
400
END

Fig.15

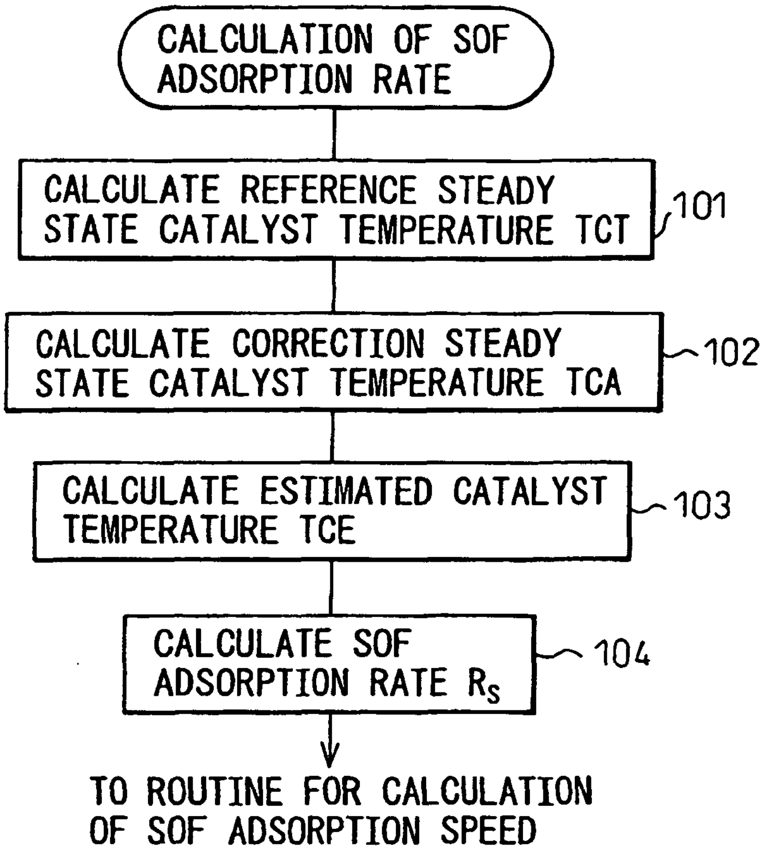
CALCULATION OF SOF ADSORPTION RATE
CALCULATE REFERENCE STEADY STATE CATALYST TEMPERATURE TCT
101
CALCULATE CORRECTION STEADY STATE CATALYST TEMPERATURE TCA
102
CALCULATE ESTIMATED CATALYST TEMPERATURE TCE
103
CALCULATE SOF ADSORPTION RATE Rs
104
TO ROUTINE FOR CALCULATION OF SOF ADSORPTION SPEED

Fig.16

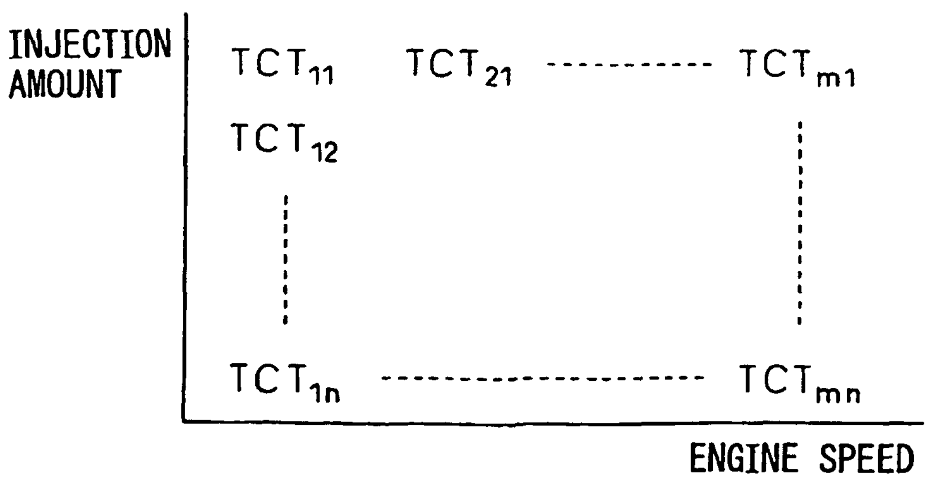
INJECTION AMOUNT
TCT11
TCT21
TCTm1
TCT12
TCT1n
TCTmn
ENGINE SPEED

Fig.17

(A)

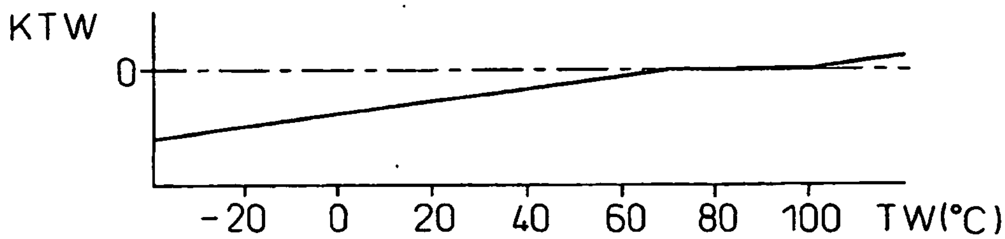


(B)

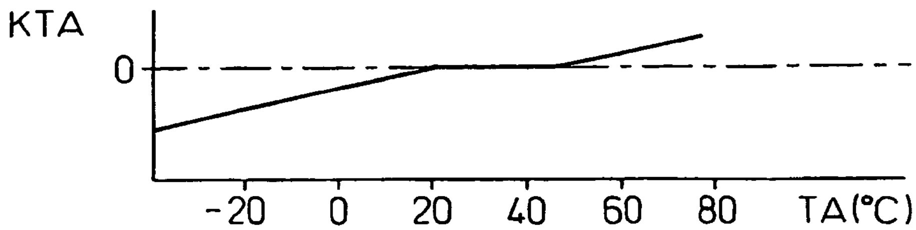


(C)

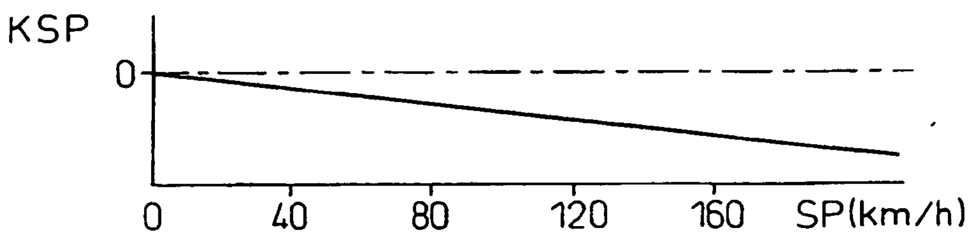


Fig.18

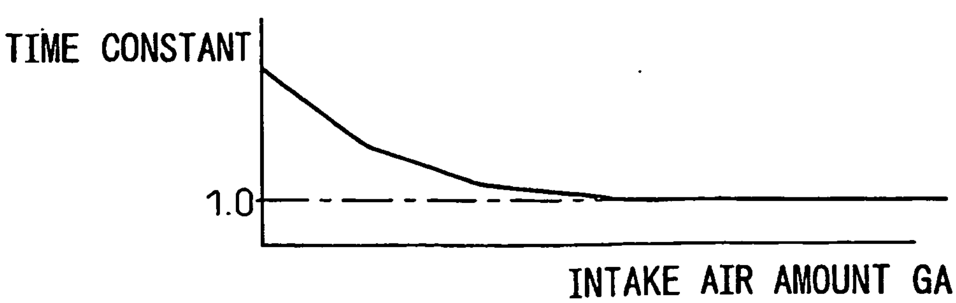

Fig.19

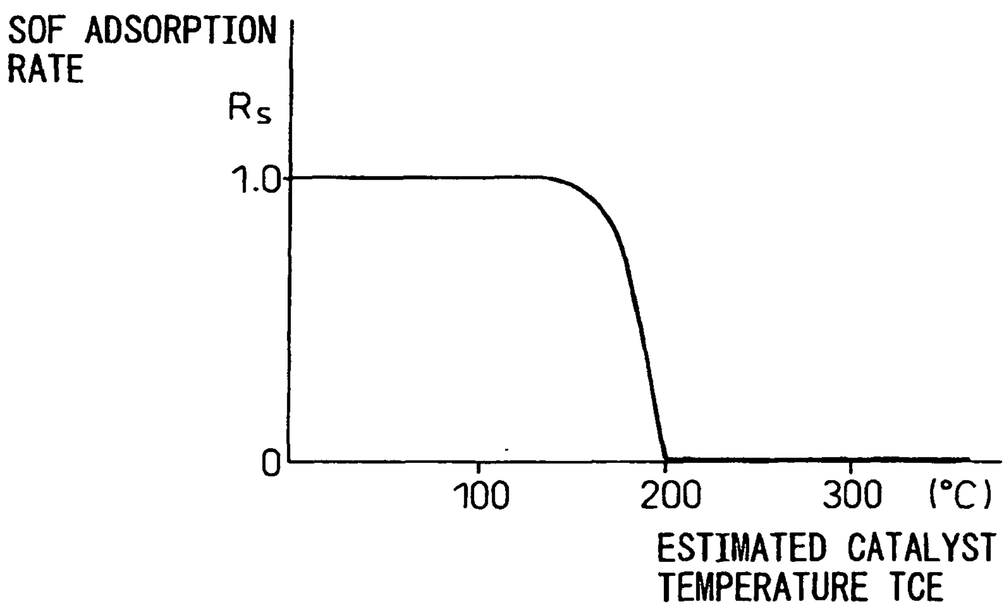
SOF ADSORPTION RATE
Rs
1.0
0
100
200
300
(°C)
ESTIMATED CATALYST TEMPERATURE TCE

Fig.20

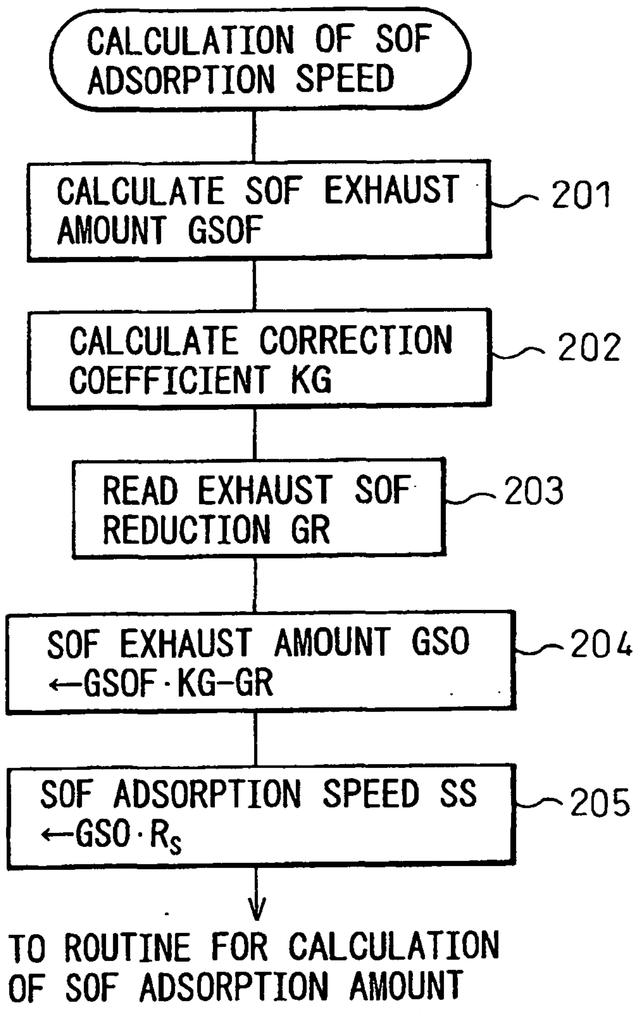
CALCULATION OF SOF ADSORPTION SPEED
CALCULATE SOF EXHAUST AMOUNT GSOF
201
CALCULATE CORRECTION COEFFICIENT KG
202
READ EXHAUST SOF REDUCTION GR
203
SOF EXHAUST AMOUNT GSO ←GSOF·KG-GR
204
SOF ADSORPTION SPEED SS ←GSO·$R_S$
205
TO ROUTINE FOR CALCULATION OF SOF ADSORPTION AMOUNT

Fig. 21

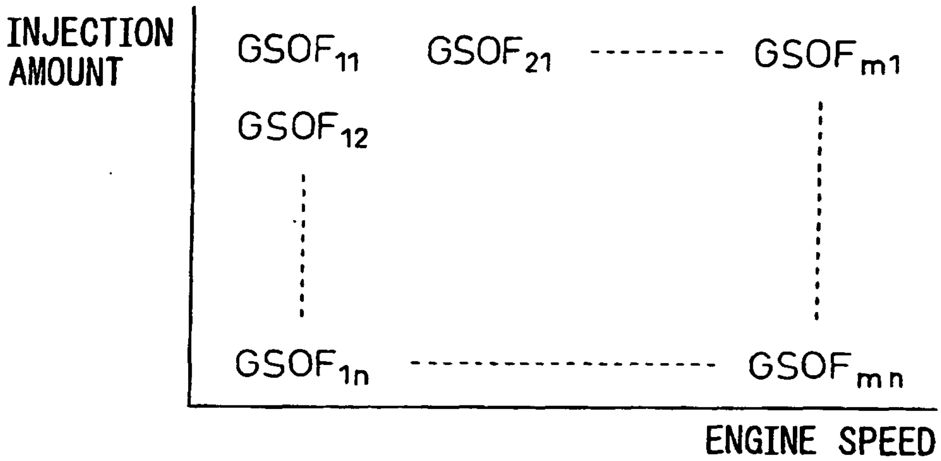
INJECTION AMOUNT
GSOF11
GSOF21
GSOFm1
GSOF12
GSOF1n
GSOFmn
ENGINE SPEED

Fig. 22

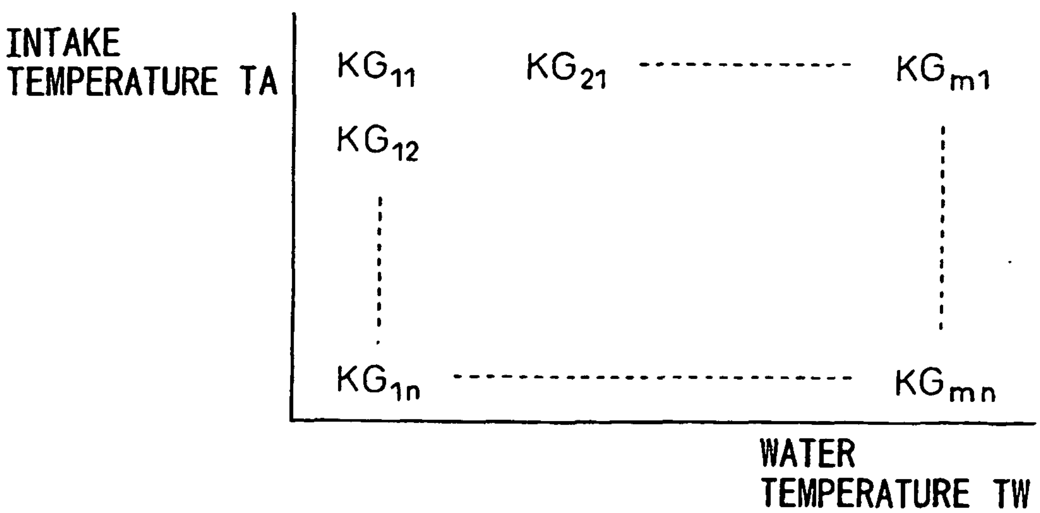
INTAKE TEMPERATURE TA
KG11
KG21
KGm1
KG12
KG1n
KGmn
WATER TEMPERATURE TW

Fig. 23

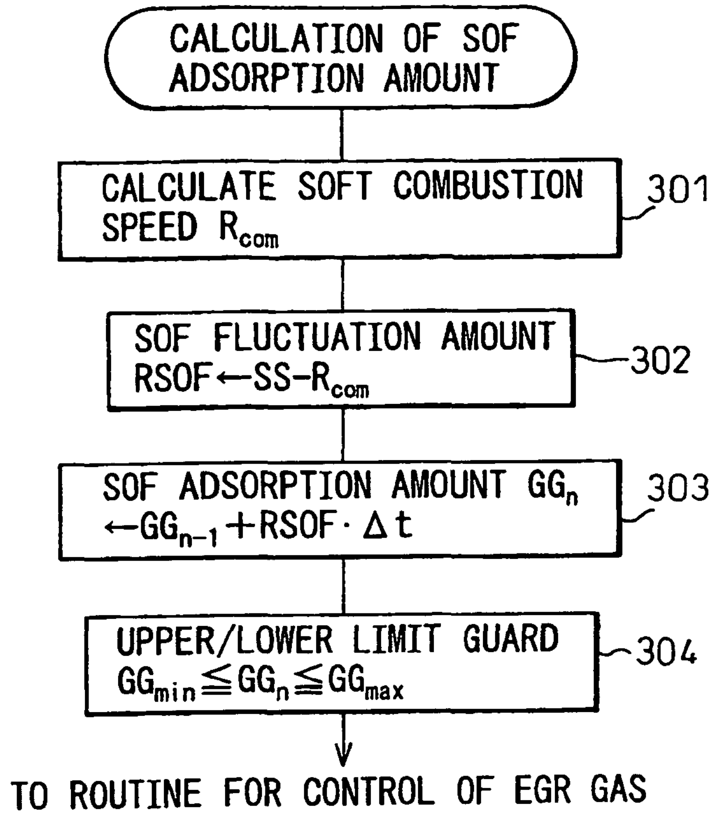
CALCULATION OF SOF ADSORPTION AMOUNT
CALCULATE SOFT COMBUSTION SPEED $R_{com}$
301
SOF FLUCTUATION AMOUNT RSOF←SS−$R_{com}$
302
SOF ADSORPTION AMOUNT $GG_n$ ←$GG_{n-1}$+RSOF·Δt
303
UPPER/LOWER LIMIT GUARD $GG_{min} \leqq GG_n \leqq GG_{max}$
304
TO ROUTINE FOR CONTROL OF EGR GAS

Fig. 24

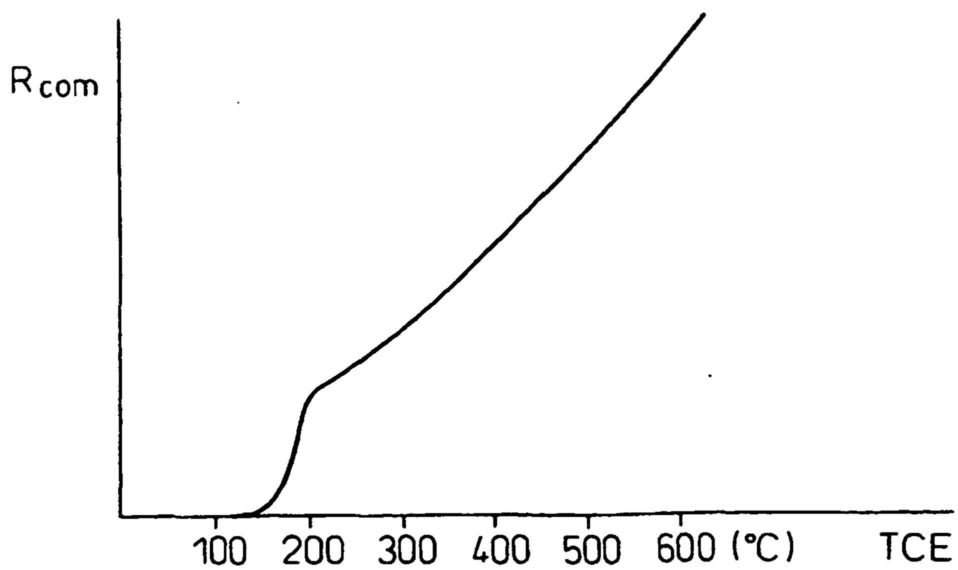
Rcom
100
200
300
400
500
600 (°C)
TCE

Fig. 25

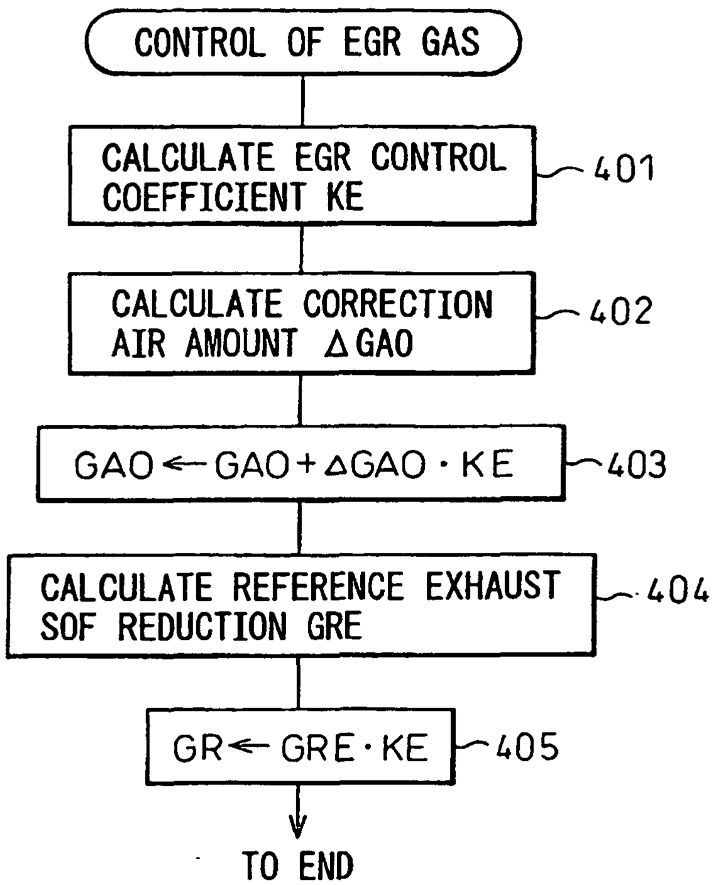
CONTROL OF EGR GAS
CALCULATE EGR CONTROL COEFFICIENT KE
401
CALCULATE CORRECTION AIR AMOUNT ΔGAO
402
GAO ← GAO + ΔGAO · KE
403
CALCULATE REFERENCE EXHAUST SOF REDUCTION GRE
404
GR ← GRE · KE
405
TO END

Fig. 26

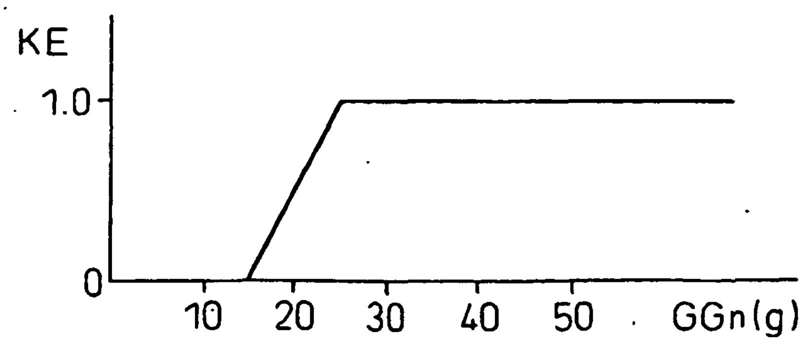
KE
1.0
0
10
20
30
40
50
GGn(g)

Fig.27

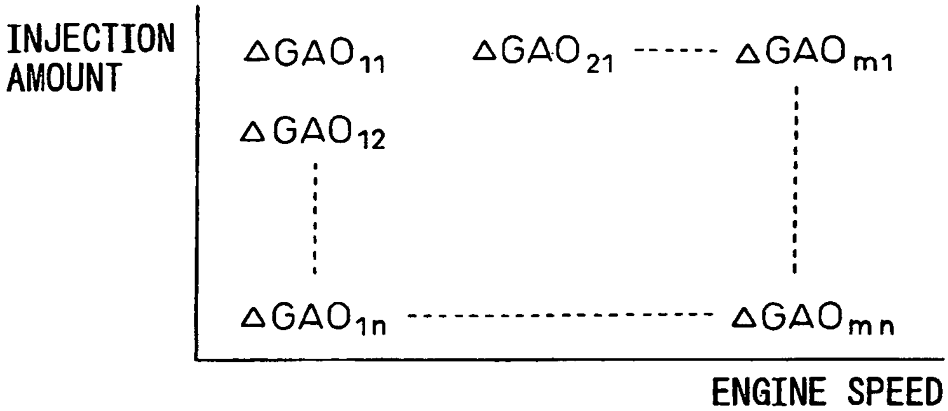
INJECTION AMOUNT
ΔGAO11
ΔGAO21
ΔGAOm1
ΔGAO12
ΔGAO1n
ΔGAOmn
ENGINE SPEED

Fig.28

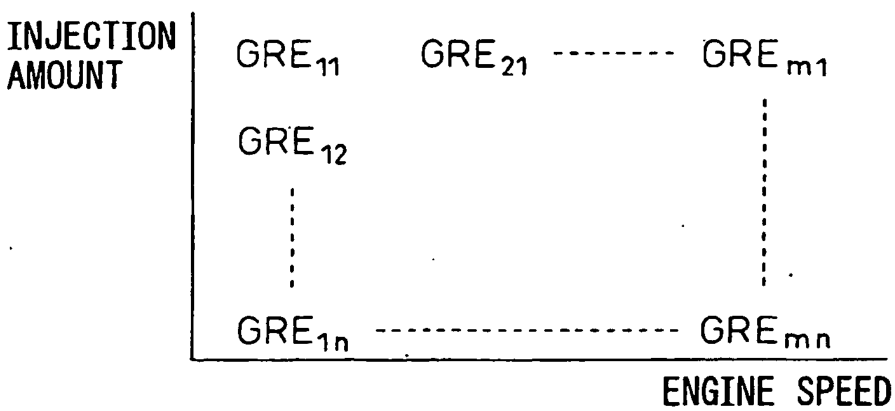
INJECTION AMOUNT
GRE11
GRE21
GREm1
GRE12
GRE1n
GREmn
ENGINE SPEED

Fig.29

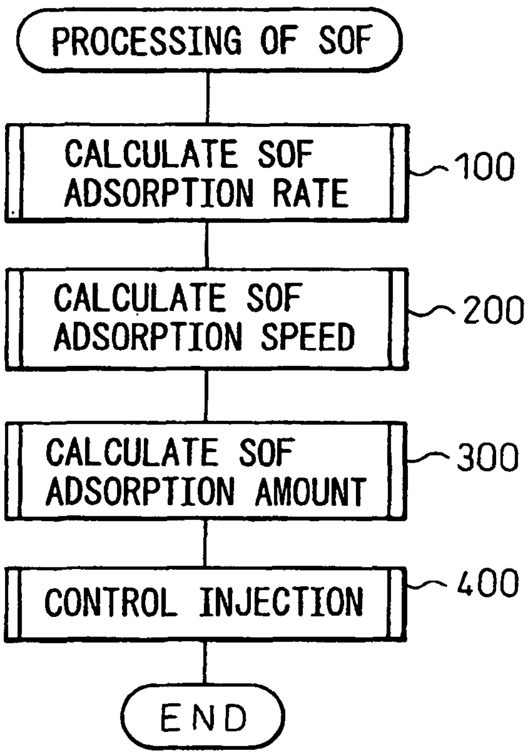
PROCESSING OF SOF
CALCULATE SOF ADSORPTION RATE
100
CALCULATE SOF ADSORPTION SPEED
200
CALCULATE SOF ADSORPTION AMOUNT
300
CONTROL INJECTION
400
END

Fig. 30

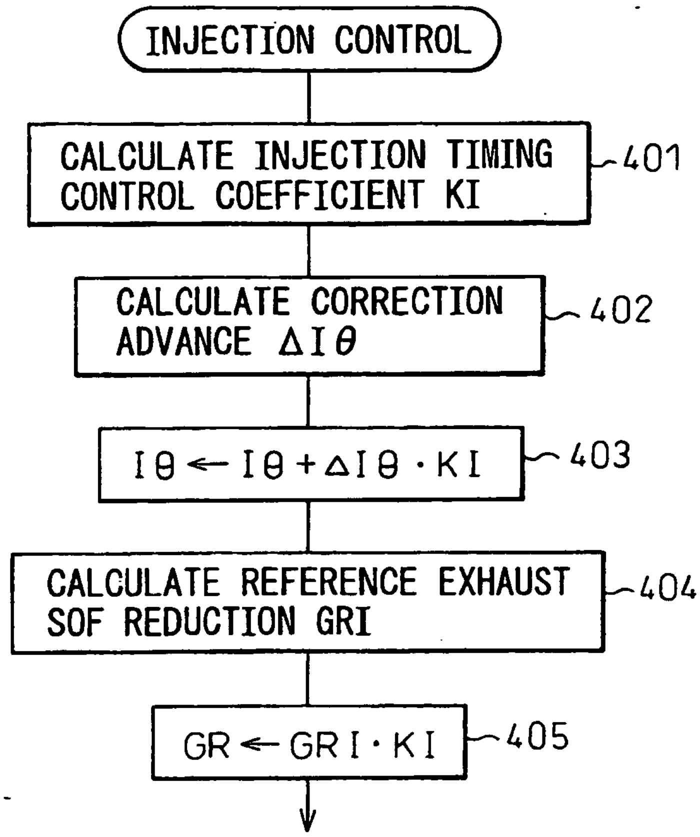
INJECTION CONTROL
CALCULATE INJECTION TIMING CONTROL COEFFICIENT KI
401
CALCULATE CORRECTION ADVANCE ΔIθ
402
Iθ ← Iθ + ΔIθ · KI
403
CALCULATE REFERENCE EXHAUST SOF REDUCTION GRI
404
GR ← GRI · KI
405

Fig. 31

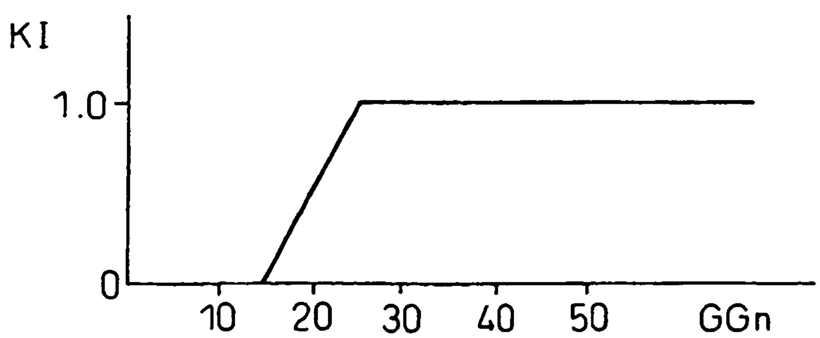
KI
1.0
0
10
20
30
40
50
GGn

Fig.32

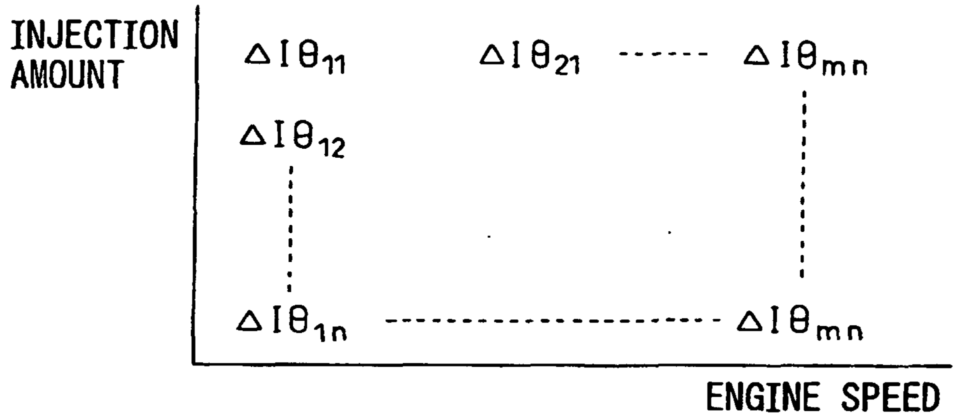
INJECTION AMOUNT
ΔIθ11
ΔIθ21
ΔIθmn
ΔIθ12
ΔIθ1n
ΔIθmn
ENGINE SPEED

Fig.33

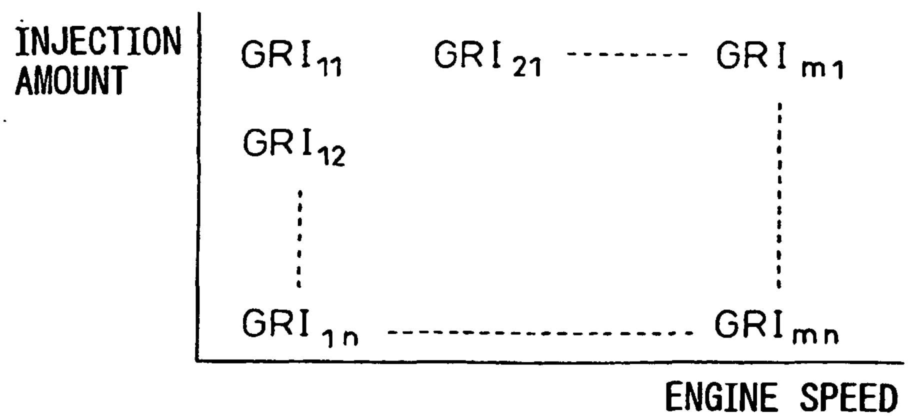
INJECTION AMOUNT
GRI11
GRI21
GRIm1
GRI12
GRI1n
GRImn
ENGINE SPEED